# FASCICULE DE BREVET EUROPEEN

(11) **EP 2 878 000 B1**
(45) Date de publication et mention de la délivrance du brevet: **07.09.2016**
(21) Numéro de dépôt: 13773321.8
(22) Date de dépôt: 26.07.2013
(51) Int. Cl.: H01F 7/02

(54) **GÉNÉRATEUR DE CHAMP MAGNÉTIQUE POUR APPAREIL THERMIQUE MAGNÉTOCALORIQUE ET APPAREIL THERMIQUE MAGNÉTOCALORIQUE ÉQUIPÉ D'UN TEL GÉNÉRATEUR**
MAGNETFELDGENERATOR FÜR MAGNETOKALORISCHE THERMISCHE VORRICHTUNG UND MAGNETOKALORISCHE THERMISCHE VORRICHTUNG MIT DERARTIGEM GENERATOR
MAGNETIC FIELD GENERATOR FOR A MAGNETOCALORIC THERMAL DEVICE, AND MAGNETOCALORIC THERMAL DEVICE EQUIPPED WITH SUCH A GENERATOR

(30) Priorité: 27.07.2012 FR 1257323
(43) Date de publication de la demande: 03.06.2015
(73) Titulaire: Cooltech Applications S.A.S., 67810 Holtzheim (FR)
(72) Inventeur: MULLER, Christian, F-67000 Strasbourg (FR)
(74) Mandataire: Koelbel, Caroline
(86) Numéro de dépôt international: PCT/IB2013/001628
(87) Numéro de publication internationale: WO 2014/016669

(56) Documents cités:
- WO-A1-88/02925
- WO-A1-2012/022857
- WO-A2-2005/074608

## Description

### Domaine technique :

La présente invention concerne un générateur de champ magnétique pour un appareil thermique magnétocalorique à structure rotative, ledit générateur de champ magnétique comportant une première et une seconde structures magnétisantes identiques, montées tête-bêche, en regard l'une de l'autre, parallèlement de part et d'autre d'un plan central, et agencées pour définir au moins deux entrefers situés dans un même plan et diamétralement opposés, chaque structure magnétisante comportant un premier et un second assemblages magnétisants structurellement identiques, diamétralement opposés, montés sur un support réalisé en au moins un matériau ferromagnétique, et délimitant lesdits au moins deux entrefers.

Elle concerne également un appareil thermique magnétocalorique à structure rotative, muni d'au moins un disque comportant des éléments magnétocaloriques, et d'un générateur de champ magnétique tel que défini ci-dessus, ledit au moins un disque d'éléments magnétocaloriques étant monté dans lesdits au moins deux entrefers.

### Technique antérieure

La technologie du froid magnétique à température ambiante est connue depuis plus d'une trentaine d'années et on connaît ses avantages en termes d'écologie et de développement durable. On connaît également ses limites quant à sa puissance calorifique utile et à son rendement thermique. Dès lors, les recherches menées dans ce domaine tendent toutes à améliorer les performances des appareils thermiques magnétocaloriques, en jouant sur les différents paramètres, tels que l'intensité du champ magnétique, les performances du matériau magnétocalorique, la surface d'échange thermique entre le fluide caloporteur et les matériaux magnétocaloriques, les performances des échangeurs de chaleur, etc.

Dans ces appareils, il est indispensable de générer un champ magnétique uniforme et intense dans au moins un entrefer dans lequel au moins un élément thermique en matériau magnétocalorique entre et sort. Plus le champ magnétique est élevé dans l'entrefer, plus l'effet magnétocalorique induit dans l'élément magnétocalorique est important, ce qui a pour effet d'augmenter la puissance thermique aussi bien que son gradient de température et donc le rendement global d'un tel appareil thermique magnétocalorique.

En outre, dans certains domaines, la compacité de l'appareil thermique est primordiale et incite à une configuration ou structure rotative dans laquelle le système magnétique est en déplacement relatif par rapport au(x) matériau(x) magnétocalorique(s). Une telle configuration rotative a en effet l'avantage de présenter un bon ratio de matériau magnétocalorique par volume utilisé. Etant donné que la puissance thermique de l'appareil thermique dépend notamment de la quantité de matériau magnétocalorique utilisée, une telle disposition est effectivement très avantageuse. WO 2005 074608 et WO 2012 022857 montrent des générateurs de champ magnétiques pour un appareil thermique magnétocalorique. Toutefois, il n'existe pas à ce jour de générateur de champ magnétique présentant un encombrement restreint, un faible coût de revient, pouvant être monté dans un appareil thermique rotatif et susceptible de générer un champ magnétique intense, uniforme et concentré à environ un tesla dans au moins deux entrefers.

### Exposé de l'invention:

La présente invention vise à répondre à ces demandes en proposant un générateur de champ magnétique destiné à être intégré dans un appareil thermique magnétocalorique. Ce générateur de champ magnétique est susceptible de créer un champ magnétique intense et uniforme dans au moins deux entrefers. En outre le générateur de champ magnétique selon l'invention est également facile à fabriquer; présente un assemblage aisé et des composants de formes géométriques simples et donc de faible coût de revient.

Dans ce but, l'invention concerne un générateur de champ magnétique tel que décrit en préambule, caractérisé en ce que les premier et second assemblages magnétisants présentent chacun une structure d'aimants permanents dont les vecteurs d'induction magnétique sont sensiblement perpendiculaires au plan central, et comportant une face passive et une face active, ladite face active délimitant lesdits entrefers, et en ce que les vecteurs d'induction des premier et second assemblages magnétisants forment à l'intérieur dudit générateur une boucle unique de circulation d'un champ magnétique à travers lesdits supports et lesdits entrefers.

Dans une variante de réalisation de l'invention, ladite structure d'aimants permanents peut être une structure étagée comportant au moins deux étages d'aimants permanents, lesdits étages peuvent être superposés de manière concentrique et comporter un premier étage d'aimants permanents, dit étage initiateur de flux magnétique formant ladite face passive des premier et second assemblages magnétisants, et un second étage d'aimants permanents, dit étage concentrateur de flux magnétique formant ladite face active des premier et second assemblages magnétisants délimitant lesdits entrefers.

Par étage initiateur, il faut comprendre étage dans lequel le ou les aimants sont situés dans un plan parallèle au plan central et supportent le second étage d'aimants, dit étage concentrateur. Dans ce cas, les aimants permanents de l'étage initiateur sont montés sur le support et servent de base ou de socle pour les aimants permanents de l'étage concentrateur correspondant. Dans une structure magnétisante, un étage initiateur pennet de conduire le flux de champ magnétique depuis le support vers l'étage concentrateur correspondant et l'autre étage initiateur permet de conduire le flux de champ magnétique dans l'autre direction, à savoir depuis l'étage concentrateur correspondant vers le support.

Ainsi, les premier et second assemblages magnétisants peuvent comporter une face active située dans l'entrefer et une face passive opposée. Dans des assemblages magnétisants comportant deux étages d'aimants permanents, l'étage initiateur desdits premier et un second assemblages magnétisants peut être monté sur ledit support, le vecteur d'induction magnétique dudit premier assemblage magnétisant peut être orienté vers sa face active et le vecteur d'induction magnétique dudit second assemblage magnétisant peut être orienté vers sa face passive, et les première et seconde structures magnétisantes peuvent être disposées de sorte que leurs faces actives soient en regard.

Selon l'invention, dans chaque assemblage magnétisant, la section des étages d'aimants permanents selon un plan parallèle au plan central peut diminuer de l'étage initiateur vers l'étage concentrateur.

Selon l'invention, les étages d'aimants permanents peuvent comporter des valeurs d'induction magnétique différentes. Par exemple, l'induction magnétique (par exemple 1 Tesla) des aimants permanents constituant un étage initiateur peut être moins forte que celle des aimants permanents constituant l'étage concentrateur correspondant (par exemple 1,4 Teslas).

Selon une variante de réalisation, chaque structure magnétisante peut comporter un dispositif agencé pour contenir le champ magnétique dans le volume délimité par ledit générateur.

Ledit dispositif agencé pour contenir le champ magnétique peut comprendre au moins une plaque réalisée en une matière ferromagnétique, disposée contre la face latérale correspondante du support et s'étendant en direction de l'entrefer correspondant.

Avantageusement, au moins une plaque dudit dispositif agencé pour contenir le flux magnétique peut présenter une partie courbée dirigée vers l'entrefer correspondant.

En variante, ledit dispositif agencé pour contenir le flux de champ magnétique peut comprendre une pièce en une matière ferromagnétique montée sur un support, ladite pièce s'étendant entre le premier et le second assemblages magnétisants d'une même structure magnétisante, dans un plan parallèle au plan central et ladite pièce comportant des zones en saillie s'étendant vers les étages concentrateurs, au niveau des entrées et/ou des sorties des entrefers.

Selon une autre variante de réalisation, chaque support peut comporter au moins un aimant permanent dans sa partie centrale positionnée entre le premier et le second assemblages magnétisants d'une même structure magnétisante, le vecteur d'induction magnétique dudit aimant permanent étant parallèle au plan central, perpendiculaire aux vecteurs d'induction desdits premier et le second assemblages magnétisants et orienté dans le sens de circulation dudit champ magnétique.

Afin d'assurer une boucle magnétique uniforme dans le générateur de champ magnétique, la partie centrale de chaque support située entre le premier et le second assemblages magnétisants d'une même structure magnétisante peut être réalisée en une matière ferromagnétique dont la perméabilité magnétique est supérieure à la matière constituant le reste dudit support.

Selon une variante de réalisation, une pièce d'isolation thermique plane, parallèle au plan central peut être montée sur chaque structure magnétisante et emmanchée sur les étages concentrateurs correspondants.

La pièce d'isolation thermique peut être un disque comportant des évidements pour le passage des aimants permanent de l'étage concentrateur et peut reposer en appui sur le palier formé par l'étage d'aimants sur lequel est monté l'étage concentrateur.

Dans une autre variante de réalisation, le générateur peut comprendre une troisième structure magnétisante interposée dans le plan central, entre la première et la seconde structures magnétisantes, ladite troisième structure magnétisante comportant deux unités magnétisantes disposées respectivement entre les premier et second assemblages magnétisants desdites première et seconde structures magnétisantes pour délimiter quatre entrefers.

Chaque unité magnétisante peut comporter au moins un aimant permanent dont le vecteur d'induction magnétique présente le même sens et la même direction que le vecteur d'induction magnétique des assemblages magnétisants entre lesquels ladite unité magnétisante est positionnée.

De préférence, les aimants permanents décrits ci-dessus et utilisés pour réaliser le générateur de champ magnétique selon la présente invention présentent une aimantation uniforme.

Dans la troisième structure magnétisante, les unités magnétisantes peuvent comporter des aimants permanents disposés ou montés de part et d'autre d'un élément de maintien réalisé en une matière ferromagnétique. En variante, les aimants permanents de la troisième structure magnétisante peuvent être disposés ou montés entre deux éléments de maintien identiques et parallèles entre eux et réalisés en une matière ferromagnétique.

De préférence, l'élément de maintien présente une forme de plaque.

L'invention concerne également un appareil thermique magnétocalorique tel que défini en préambule, caractérisé en ce qu'il comporte au moins un générateur de champ magnétique tel que défini ci-dessus et en ce que ledit disque portant lesdits éléments magnétocaloriques est monté dans les entrefers dudit générateur de champ magnétique.

Les éléments magnétocaloriques susceptibles d'être positionnés dans les entrefers du générateur de champ magnétique selon l'invention sont destinés à être en contact thermique avec un fluide caloporteur. Ce fluide caloporteur peut par exemple circuler de leur extrémité froide vers leur extrémité chaude au cours d'une première phase du cycle magnétique qui correspond à une phase dans laquelle les éléments magnétocaloriques sont positionnés dans un entrefer et soumis à un champ magnétique provoquant une hausse de leur température et de leur extrémité chaude vers leur extrémité froide au cours d'une seconde phase du cycle magnétique dans laquelle les éléments magnétocaloriques sont positionnés hors de l'entrefer et soumis à un champ magnétique nul provoquant une diminution de leur température. Le contact thermique entre le fluide caloporteur et les éléments magnétocaloriques peut être réalisé par un fluide caloporteur passant le long ou à travers les éléments magnétocaloriques. A cet effet, les éléments magnétocaloriques peuvent être constitués par un ou plusieurs matériaux magnétocaloriques et peuvent être perméables au fluide caloporteur. Ils peuvent également comprendre des passages de circulation du fluide s'étendant entre les deux extrémités des éléments magnétocaloriques. Ces passages peuvent être réalisés par la porosité des matériaux magnétocaloriques, ou par des canaux par exemple obtenus par un ensemble de plaques de matériau magnétocalorique.

De préférence, le fluide caloporteur est un liquide. A cet effet, il est par exemple possible d'utiliser de l'eau pure ou additionnée d'antigel, un produit glycolé ou une saumure.

Selon l'invention, le générateur de champ magnétique dudit appareil thermique magnétocalorique peut comprendre une troisième structure magnétisante interposée dans le plan central, entre la première et la seconde structures magnétisantes, ladite troisième structure magnétisante comportant deux unités magnétisantes disposées respectivement entre les premier et second assemblages magnétisants desdites première et seconde structures magnétisantes pour délimiter quatre entrefers.

### Description sommaire des dessins :

La présente invention et ses avantages apparaîtront mieux dans la description suivante de modes de réalisation donnés à titre d'exemples non limitatifs, en référence aux dessins annexés, dans lesquels:
- la figure 1 est une vue en perspective d'un générateur de champ magnétique selon l'invention,
- la figure 2 est une vue en coupe selon le plan A de la figure 1,
- la figure 3 est une vue en perspective du générateur de.la figure 1 muni d'un dispositif apte à contenir le flux de champ magnétique,
- la figure 4 représente une vue en perspective d'une structure magnétisante du générateur de la figure 3,
- la figure 5 représente une variante de réalisation de la structure magnétisante de la figure 4,
- la figure 6 représente une vue identique à celle de la figure 4, selon encore une autre variante de réalisation,
- la figure 7 est une vue en perspective d'une autre variante de réalisation d'une structure magnétisante,
- la figure 8 est une vue en perspective d'une variante du générateur de champ magnétique de la figure 1,
- la figure 9 représente une vue en coupe selon le plan B du générateur de la figure 8,
- la figure 10 représente le générateur de la figure 8 muni de dispositifs apte à contenir le flux de champ magnétique.
- la figure 11 représente le générateur de la figure 10 selon un angle différent,
- la figure 12 est une vue d'une autre variante de réalisation du générateur de champ magnétique selon l'invention,
- la figure 13 est une représentation schématique simplifiée d'un appareil thermique magnétocalorique comportant un générateur de champ magnétique selon l'invention tel que celui de la figure 3,
- les figures 14A à 14E représentent différentes variantes de réalisation d'une troisième structure magnétisante, et
- la figure 15 représente une autre variante de réalisation du générateur de champ magnétique selon l'invention.

### Illustrations de l'invention et différentes manières de la réaliser :

Dans les exemples de réalisation illustrés, les pièces ou parties identiques portent les mêmes références numériques.

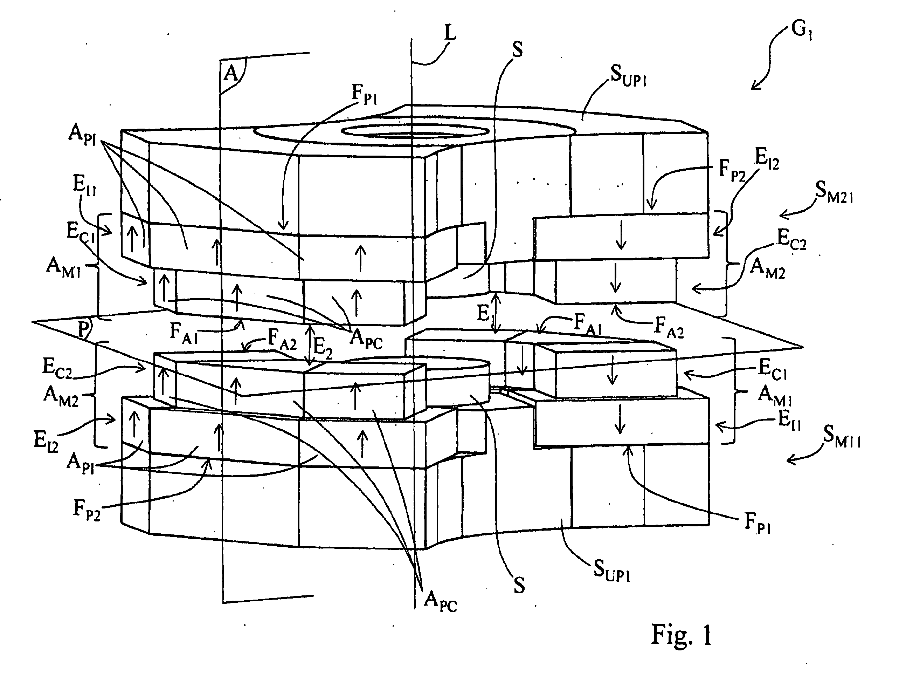

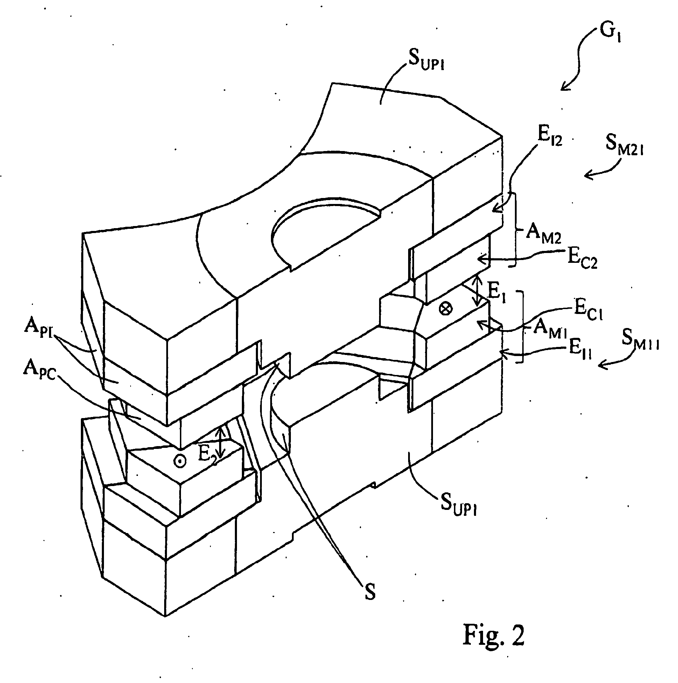

Les figures 1 et 2 représentent une première forme de réalisation d'un générateur G₁ de champ magnétique selon l'invention. Ce générateur de champ magnétique G₁ comporte une première structure magnétisante S_{M11} et une seconde structure magnétisante S_{M21} identiques, montées tête-bêche et disposées en regard l'une de l'autre parallèlement à un plan central P. Elles délimitent entre elles deux entrefers E₁, E₂, diamétralement opposés par rapport à l'axe longitudinal L du générateur de champ magnétique G₁. Chaque structure magnétisante S_{M11}, S_{M21} comporte un premier assemblage magnétisant A_{M1} et un second assemblage magnétisant A_{M2}. Les deux structures magnétisantes S_{M11}, S_{M21} sont disposées l'une par rapport à l'autre de telle sorte que le premier assemblage magnétisant A_{M1} de la première structure magnétisante S_{M11} soit en regard du second assemblage magnétisant A_{M2} de la seconde structure magnétisante S_{M21} et que le second assemblage magnétisant A_{M2} de la première structure magnétisante S_{M11} soit en regard du premier assemblage magnétisant A_{M1} de la seconde structure magnétisante S_{M21} pour générer dans les entrefers E₁, E₂, des vecteurs d'induction parallèles et orientés dans des directions opposées.

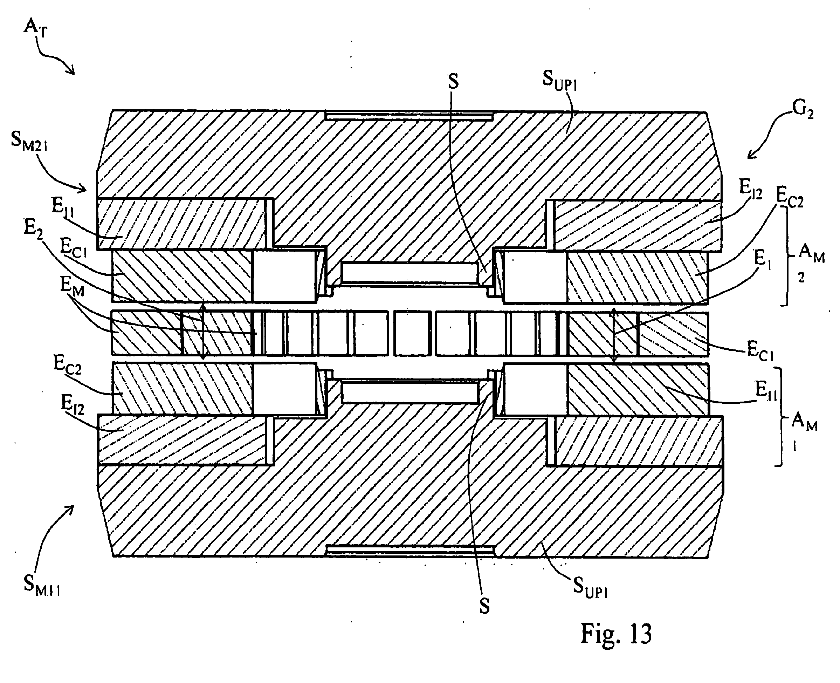

Les assemblages magnétisants A_{M1} et A_{M2} de chaque structure magnétisante S_{M11}, S_{M21} sont montés diamétralement opposés par rapport à l'axe longitudinal L sur un support S_{UP1} réalisé en une matière ferromagnétique telle qu'un acier, un alliage à base de fer ou du fer. Ce support S_{UP1} a pour objet de maintenir en position les premier A_{M1} et second A_{M2} assemblages magnétisants et de conduire les lignes de flux magnétique sortant du premier assemblage magnétisant A_{M1} vers le second assemblage magnétisant A_{M2}. A cet effet, et comme représenté à titre d'exemple sur la figure 1, le support S_{UP1} peut comporter une portion en saillie S s'étendant vers la structure magnétisante opposée S_{M11}, S_{M21}, autour de l'axe longitudinal L, entre les premier et second assemblages magnétisants A_{M1}, A_{M2}. Cette portion en saillie S permet d'assurer une circulation du flux magnétique homogène entre les premier A_{M1} et second A_{M2} assemblages magnétisants en évitant une saturation du flux magnétique dans le support S_{UP1}, cela sans influencer l'encombrement du générateur G₁. Dans le générateur G₁ représenté à la figure 1, cette portion en saillie S permet également de réaliser un centrage du générateur G₁ par rapport à une pièce d'un appareil thermique magnétocalorique A_{T} comportant des éléments magnétocaloriques E_{M} et positionnée entre les deux structures magnétisantes S_{M12}, S_{M21} tel que représenté à la figure 13. Le support S_{UP1} peut également présenter une configuration différente et être réalisé par un assemblage de plusieurs plaques en une matière ferromagnétique formant un support avec une structure dite en sandwich présentant un coût de fabrication plus économique. Cette configuration peut être mise en oeuvre dans tous les supports S_{UP1}, S_{UP2}, S_{UP3}, S_{UP4}, S_{UP9} décrits.

Le fait que les deux structures magnétisantes S_{M11}, S_{M21} formant le générateur de champ magnétique G₁ soient identiques répond à une contrainte d'optimisation des coûts de revient pour la fabrication dudit générateur G₁ selon l'invention. En effet, cela permet de réduire le nombre de pièces nécessaires à sa fabrication, donc de faciliter son montage, ainsi que le référencement des pièces et la gestion du stock.

En plus de pouvoir être réalisé facilement et à moindre coût, les assemblages magnétisants A_{M1}, A_{M19} et A_{M2,} A_{M29} du générateur selon l'invention présentent une structure étagée permettant d'optimiser l'induction magnétique dans les entrefers correspondants. Dans l'exemple de réalisation illustré à la figure 1, chaque assemblage magnétisant A_{M1} et A_{M2} comporte deux étages E_{I1}, E_{C1}, E_{I2}, E_{C2} d'aimants permanents A_{P1}, A_{PC}. Ces étages E_{I1,} E_{C1}, E_{I2}, E_{C2} sont superposés et positionnés de manière centrée l'un par rapport à l'autre. Un premier étage, dit étage initiateur E_{I1}, E_{I2} de champ magnétique est monté sur le support S_{UP1} et un second étage, dit étage concentrateur E_{C1}, E_{C2} de champ magnétique est monté sur l'étage initiateur E_{I1}, E_{I2} de manière centrée. Cet étage concentrateur E_{C1}, E_{C2} a pour objet de concentrer, d'intensifier et de diriger le champ magnétique de l'étage initiateur E_{I1}, E_{I2} vers ou depuis l'entrefer E₁, E₂ correspondant. En effet, dans une structure magnétisante, un étage initiateur permet de conduire le flux de champ magnétique depuis le support vers l'étage concentrateur correspondant et l'autre étage initiateur permet de conduire le flux de champ magnétique dans l'autre direction, à savoir depuis l'étage concentrateur correspondant vers le support. Grâce à la forme étagée des premiers A_{M1} et seconds A_{M2} assemblages magnétisants le flux de champ magnétique est concentré et intensifié dans les entrefers E₁, E₂.

En d'autres termes, les étages E_{I1}, E_{I2}, E_{C1}, E_{C2} sont montés l'un sur l'autre de manière à former une structure présentant des paliers et dont la section selon un plan parallèle au plan P se réduit en direction de l'entrefer E₁, E₂ correspondant, à la manière d'une structure gigogne. A cet effet, l'étage initiateur E_{I1}, E_{I2} comporte une section selon un plan parallèle au plan P plus grande que celle de l'étage concentrateur E_{C1}, E_{C2}.

En variante de cette structure étagée et conformément à la figure I5, les aimants permanents A_{PU} formant les première S_{M19} et seconde S_{M29} structures magnétisantes peuvent ne former qu'un seul étage Eu d'aimants permanents positionné sur le support correspondant S_{UP9}. Une telle configuration présente l'avantage d'être montée plus rapidement, donc avec un coût plus faible.

Les aimants permanents A_{P1}, A_{PC}, A_{PU} des étages E_{I1}, E_{I2}, E_{C1}, E_{C2} , E_{U} sont de préférence uniformément magnétisés et leur vecteur d'induction est perpendiculaire au plan P. Les assemblages magnétisants A_{M1}, A_{M19} et A_{M2}. A_{M29} comportent une face active F_{A1}, F_{A2} située dans l'entrefer E₁, E₂, E₃, E₄, E₅, E₆, E₇, E₈, E₉, E₁₀ et une face passive F_{P1}, F_{P2} située en dehors de l'entrefer E₁, E_{2.} E₃, E₄, E₅, E₆, E₇, E₈, E₉, E₁₀. Ces faces actives F_{A1}, F_{A2} et passives F_{P1}, F_{P2} sont parallèles entre elles et au plan central P. La face passive F_{P1}, F_{P2} d'un assemblage magnétisant A_{M1}, A_{M19}, A_{M2}, A_{M29} correspond à la face des aimants A_{P1} ou A_{PU} de l'étage initiateur E_{I1}, E_{I2} ou de l'étage unique E_{U} en contact avec le support S_{UP1}, S_{UP9} et sa face active F_{A1}, F_{A2} correspond à la face des aimants A_{PC} ou A_{PU} de l'étage concentrateur E_{C1}, E_{C2} ou de l'étage unique Eu délimitant l'entrefer E₁, E₂.

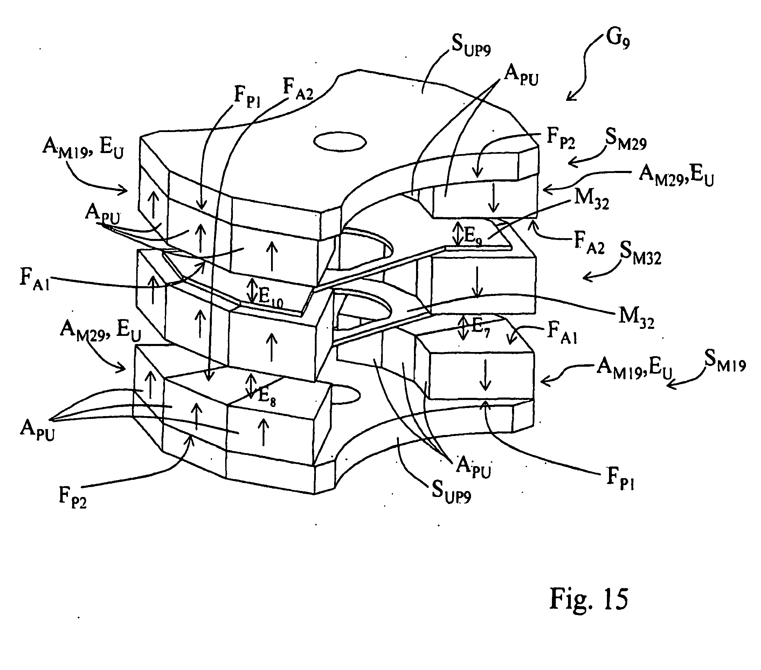

Dans les exemples illustrés aux figures 1 à 12, les structures magnétisantes S_{M11}, S_{M12}, S_{M13}, S_{M14}, S_{M15}, S_{M21}, S_{M22} comportent deux étages E_{I1}, E_{I2}. E_{C1}, E_{C2} d'aimants permanents A_{PI}, A_{PC} et chaque étage E_{I1}, E_{I2}, E_{C1}, E_{C2} comporte trois aimants permanents A_{PI}, A_{PC}. L'invention n'est toutefois pas limitée à cette configuration. En effet, les étages E_{I1}, E_{I2,} E_{C1}, E_{C2} peuvent ne pas comporter le même nombre d'aimants permanents A_{PI}, A_{PC} et peuvent en comporter un seul ou plusieurs. De la même manière, plus de deux étages E_{I1}, E_{I2}, E_{C1}, E_{C2} peuvent composer une structure magnétisante S_{M11}, S_{M12}, S_{M13}, S_{M14}, S_{M15}, **S**_{M21}, S_{M22} ou un seul étage Eu peut être prévu pour former une structure magnétisante, comme cela est le cas dans l'exemple de générateur représenté à la figure 15. De même, la forme des étages E_{I1}, E_{I2}, E_{C1}, E_{C2}, E_{U} ici avec des sections quadrangulaires, et celle des aimants permanent A_{PI}, A_{PC}, A_{PU} les constituant peuvent être différentes de celles illustrées, et adaptées à la forme et au volume des entrefers E₁, E₂, E₃, E₄, E₅, E₆, E₇, E₈, E₉, E₁₀ dictés par la forme des éléments magnétocaloriques E_{M} devant être soumis au champ magnétique à l'intérieur des entrefers E₁, E₂, E₃, E₄, E₅, E₆, E₇, E₈, E₉, E₁₀ ainsi qu'à l'intensité de ce champ magnétique.

Dans une même structure magnétisante S_{M11}, S_{M12}, S_{M13}, S_{M14}, S_{M15}, S_{M21}, S_{M22}, les vecteurs d'induction des aimants permanents A_{PI}, A_{PC}, A_{PU} des étages E_{I1}, E_{I2.} E_{C1}, E_{C2}, E_{U} ont le même sens. Toutefois, pour réaliser une circulation magnétique intense dans le générateur G₁ suivant une boucle magnétique unique incluant les entrefers E₁, E₂, le sens des vecteurs d'induction dans les assemblages magnétisants A_{M1}, A_{M2} d'une même structure magnétisante S_{M11}, S_{M12,} S_{M13}, S_{M14}, S_{M15}, S_{M21}, S_{M22}, est inversé, de sorte que le sens du flux d'induction magnétique dans les entrefers E₁, E₂ est également inversé. Il en est de même pour le sens magnétique des assemblages magnétisants A_{M19}, A_{M29} dans chaque structure magnétisante S_{M19}, S_{M29} du générateur G₉ de la 15.

A cet effet, en considérant la première structure magnétisante S_{M11} du générateur G₁ de la figure 1, représentée en partie inférieure du dessin, les aimants A_{PC} du premier assemblage magnétisant A_{M1} présentent une face active F_{A1}, du côté de l'entrefer E₁ située en regard du plan central P dans laquelle rentre le flux d'induction magnétique. De la même manière, les aimants A_{PC} du second assemblage magnétisant A_{M2} présentent une face active F_{A2,} du côté de l'entrefer E₂ située en regard du plan central P de laquelle sort le flux d'induction magnétique. Les faces actives F_{A1} et F_{A2} sont, en outre, situées dans un même plan. Le vecteur d'induction des aimants permanents A_{PI}. A_{PC} du second assemblage magnétisant A_{M2} est orienté vers le plan P, tandis que le vecteur d'induction des aimants permanents A_{PI,} A_{PC} du premier assemblage magnétisant A_{M1} est dans le sens opposé, s'éloignant du plan central P, ces deux vecteurs étant perpendiculaires au plan central P.

La seconde structure magnétisante S_{M21} (illustrée en partie supérieure de la figure 1) est identique à la première structure magnétisante S_{M11}. Elle est disposée par rapport au plan P de telle sorte que les faces actives F_{A1} et F_{A2} des premier et second assemblages magnétisants A_{M1}, A_{M2} soient parallèles au plan P et en regard des faces actives F_{A2} et F_{A1} des second et premier assemblages magnétisants A_{M2,} AM₁ de la première structure magnétisante S_{M11}. De plus, le premier assemblage magnétisant A_{M1} de la première structure magnétisante S_{M11} est disposé en regard du second assemblage magnétisant A_{M2} de la seconde structure magnétisante S_{M21} tandis que le second assemblage magnétisant A_{M2} de la première structure magnétisante S_{M11} est en regard du premier assemblage magnétisant A_{M1} de la seconde structure magnétisante S_{M21}. De cette manière, les aimants permanent A_{PC} des étages concentrateurs E_{C1}, E_{C2} qui se font.face présentent des vecteurs d'induction de même direction et de même sens et délimitent deux entrefers E₁, E₂. Un premier entrefer E₁ est situé à droite sur la figure 1 et est matérialisé par le volume libre entre le premier assemblage magnétisant A_{M1} de la première structure magnétisante S_{M11} et le second assemblage magnétisant A_{M2} de la seconde structure magnétisante S_{M21} et les lignes de flux magnétiques sont orientées de la seconde structure magnétisante S_{M21} vers la première structure magnétisante S_{M11} (vers le bas de la figure 1). Un second entrefer E₂ est situé à gauche sur la figure 1 et matérialisé par le volume libre entre le second assemblage magnétisant A_{M2} de la première structure magnétisante S_{M11} et le premier assemblage magnétisant A_{M1} de la seconde structure magnétisante S_{M21} et les lignes de flux magnétiques sont orientées de la première structure magnétisante S_{M11} vers la seconde structure magnétisante S_{M21} (vers le haut de la figure 1). Le générateur de champ magnétique G₁ génère une unique boucle magnétique qui circule, entre les première et seconde structures magnétisantes S_{M11}, S_{M21}, uniquement à travers les entrefers E₁, E₂ dans lesquels le champ magnétique est concentré. En d'autres termes, à l'extérieur des première SM₁₁ et seconde SM₁₂ structures magnétisantes, le flux magnétique ne circule qu'à travers les entrefers E1, E2. Cela est le cas dans toutes les variantes du générateur de champ magnétique G₁, G₂, G₃, G₄, G₅, G₆, G₇, G₈ selon l'invention en référence aux figures 1 à 12. En d'autres termes, ce générateur G₁, G₂, G₃, G₄, G₅, G₆, G₇, G₈ ne comporte ainsi aucune liaison magnétique réalisée par l'intermédiaire d'un matériau magnétisable ou magnétisé entre les structures magnétisantes S_{M11}, S_{M12}, S_{M13}, S_{M14}, S_{M15}, S_{M21}, S_{M22}, S_{M3}.

Le générateur de champ magnétique G₁ représenté dans la figure 1 peut être monté dans ou supporté par un carter ou un support réalisé en une matière ferromagnétique servant de blindage magnétique empêchant les lignes de champ magnétique de sortir du volume délimité par le générateur G₁. Il en est de même pour les autres générateurs selon l'invention.

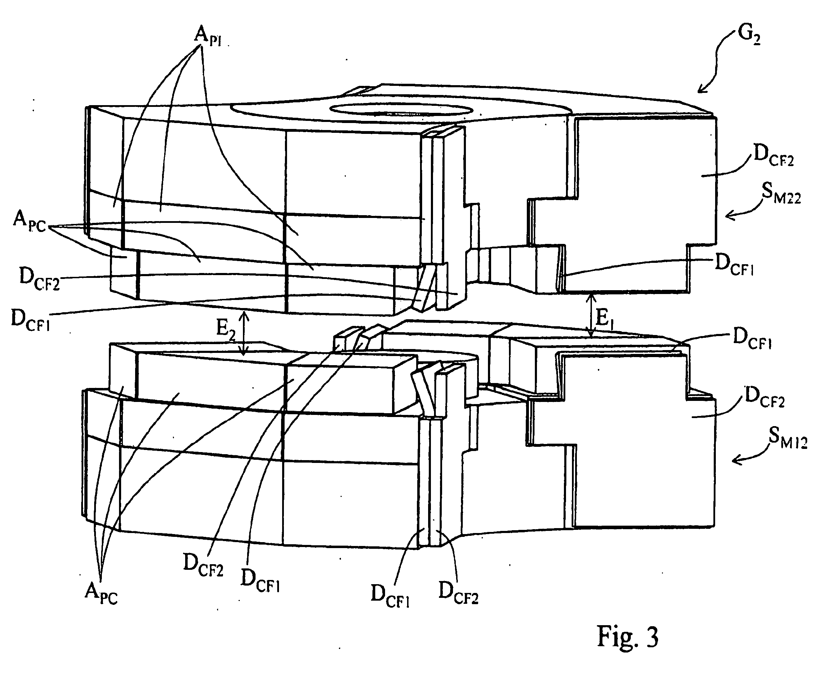

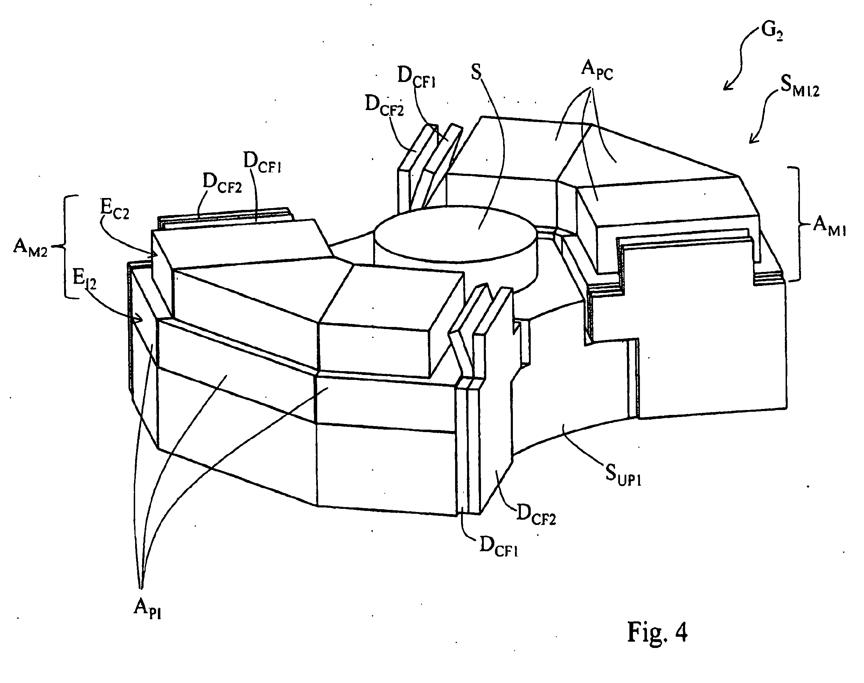

Les figures 3 et 4 représentent une variante de réalisation dans laquelle chaque structure magnétisante S_{M12}, S_{M22} du générateur G₂ comporte un dispositif D_{CF1}, D_{CF2} agencé pour contenir le flux de champ magnétique dans le volume défini par ledit générateur G₂. Ce dispositif se présente sous la forme de plaques D_{CF1}, D_{CF2} réalisées en une matière ferromagnétique telle qu'un acier ou du fer et dont le but est de canaliser le champ magnétique dans la zone où se trouvent les aimants A_{PI}, A_{PC} afin d'avoir un champ magnétique intense dans les entrefers E₁, E₂ et nul en dehors. On crée ainsi une variation d'induction magnétique la plus brusque possible entre une position située dans l'entrefer et une position située hors de l'entrefer E₁, E₂ correspondant.

Ces plaques D_{CF1}, D_{CF2} sont montées contre les faces latérales des étages initiateurs E₁₁, E₁₂. c'est-à-dire les faces situées au niveau de l'entrée et de la sortie des entrefers, E₁, E₂, pour les éléments magnétocaloriques E_{M} ainsi que contre les faces latérales du support S_{UP1}. La plaque interne D_{CF1} possède une partie courbée vers l'entrefer E₁, E₂ permettant de diriger les lignes de flux vers le volume du générateur G₂, et plus particulièrement vers l'entrefer E₁, E₂ correspondant. Ces plaques peuvent être également prévues dans la variante de réalisation illustrée à la figure 15 à un seul étage d'aimants.

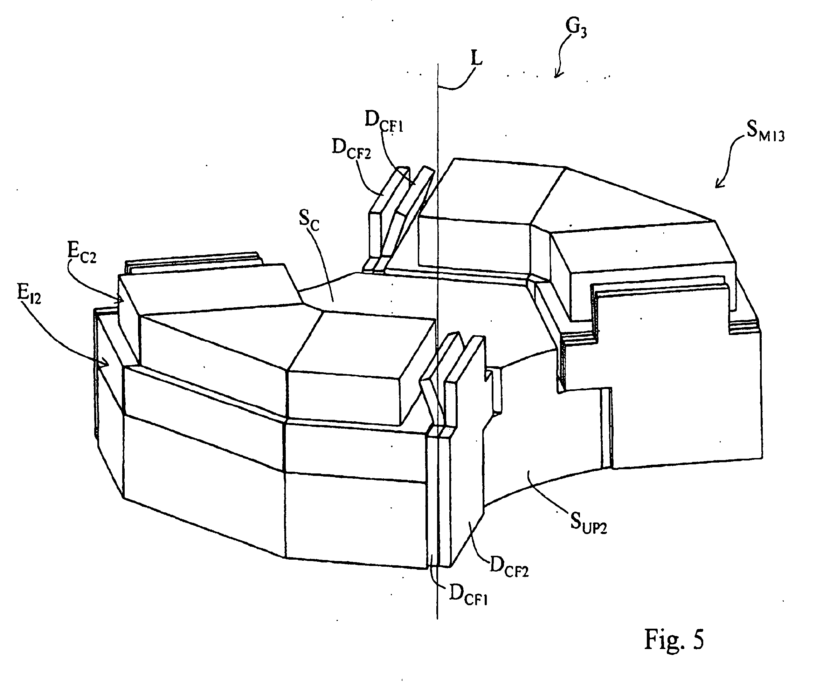

La figure 5 représente une variante de réalisation dans laquelle le générateur de champ magnétique G₃ illustré se distingue de celui des figures 3 et 4 uniquement par la forme du support S_{UP2} d'une structure magnétisante S_{M13} dont la partie centrale ne présente pas de portion en saillie. A cet effet, pour éviter une saturation magnétique dans ledit support S_{UP2}, ce dernier peut comprendre des parties telle que la zone centrale Sc autour de l'axe longitudinal L dont la perméabilité magnétique est supérieure aux autres parties, en utilisant par exemple un alliage de fer et de Cobalt pour réaliser cette zone centrale Sc et uniquement du fer pour le reste du support S_{UP2}.

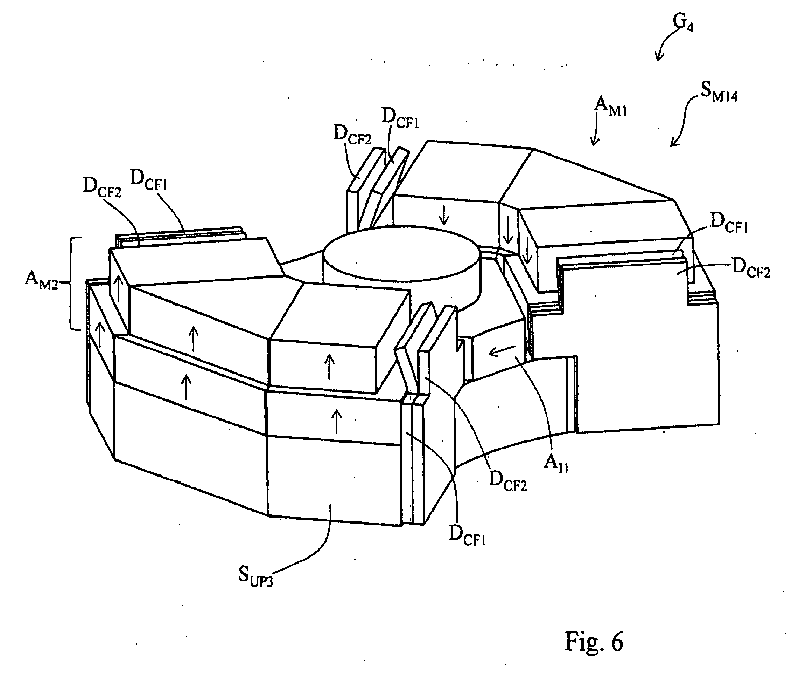

La figure 6 représente une variante de réalisation dans laquelle le générateur de champ magnétique G₄ se distingue de celui des figures 3 et 4 également par son support S_{UP3} qui comporte un aimant permanent A_{I1} favorisant la circulation du flux magnétique entre les premier A_{M1} et second A_{M2} assemblages magnétisants d'une structure magnétisante S_{M14}. A cet effet, cet aimant permanent A_{I1} est uniformément aimanté et son vecteur d'induction magnétique est parallèle au plan P, perpendiculaire au vecteur d'induction desdits premier A_{M1} et le second A_{M2} assemblages magnétisants et orienté du premier assemblage magnétisant A_{M1} vers le second assemblage magnétisant A_{M2} dans le sens de circulation du champ magnétique. En variante, ledit support S_{UP3} peut comporter, au moins en partie, de la ferrite, par exemple au niveau des parties supportant le premier A_{M1} et le second A_{M2} assemblages magnétisants.

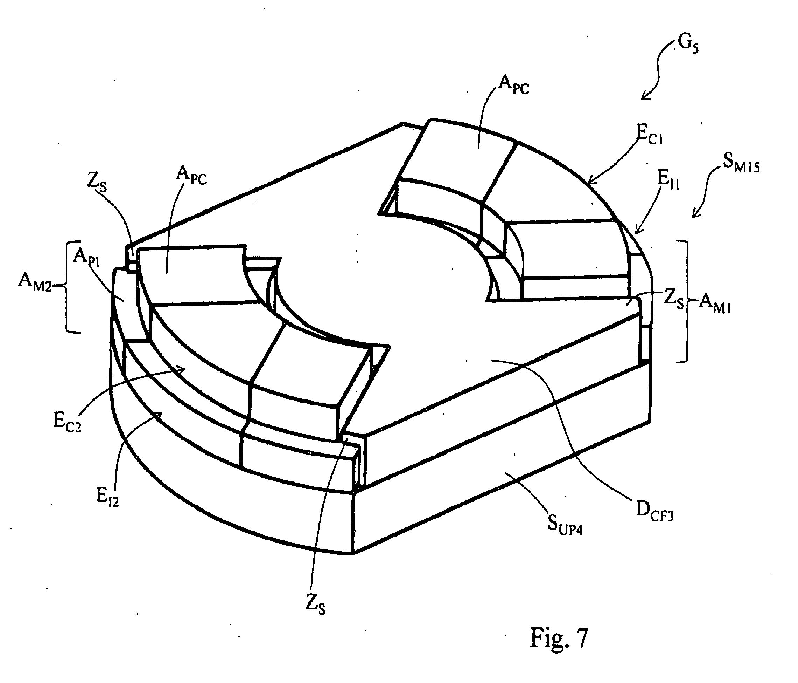

La figure 7 représente une variante de réalisation dans laquelle le générateur de champ magnétique G₅ comporte un dispositif D_{CF3} agencé pour contenir le flux de champ magnétique dans le volume défini par ledit générateur G₅, ce dispositif D_{CF3} constituant une variante du dispositif équivalent D_{CF1}, D_{CF2} des figures 3 et 4. Ce dispositif D_{CF3} comporte une pièce en une matière ferromagnétique montée sur le support S_{UP4} d'une structure magnétisante S_{M15}. A cet effet, le support S_{UP4} présente une forme de plaque parallèle au plan central P aux extrémités arrondies au niveau desquelles sont montés de part et d'autre les premier A_{M1} et second A_{M2} assemblages magnétisants. La pièce D_{CF3} présente une forme de plaque s'étendant sensiblement sur le reste de la surface du support S_{UP4} et présentant, au niveau des entrées et des sorties des entrefers E₁, E₂, des zones en saillie Z_{S} s'étendant vers les étages concentrateurs E_{C1}, E_{C2}. Cette pièce D_{CF3} a pour objet de canaliser le champ magnétique dans la zone où se trouvent les aimants A_{PI}, A_{PC} et d'assurer une bonne circulation du flux magnétique ce, afin d'avoir un champ magnétique le plus intense possible dans les entrefers E₁, E₂ et également une différence d'intensité magnétique la plus importante possible entre une position dans l'entrefer E₁, E₂ et une position en dehors de l'entrefer E₁, E₂.

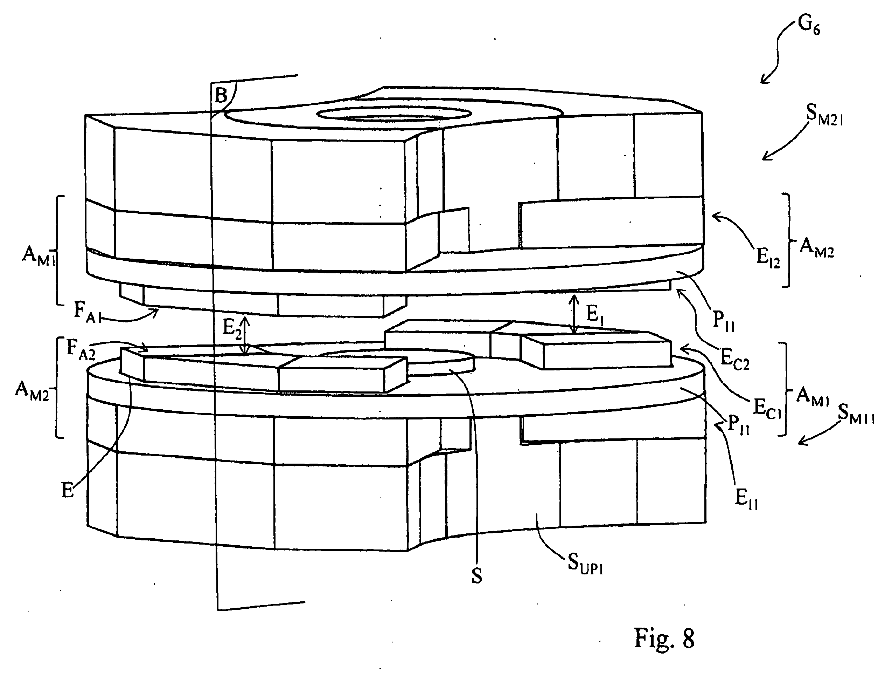

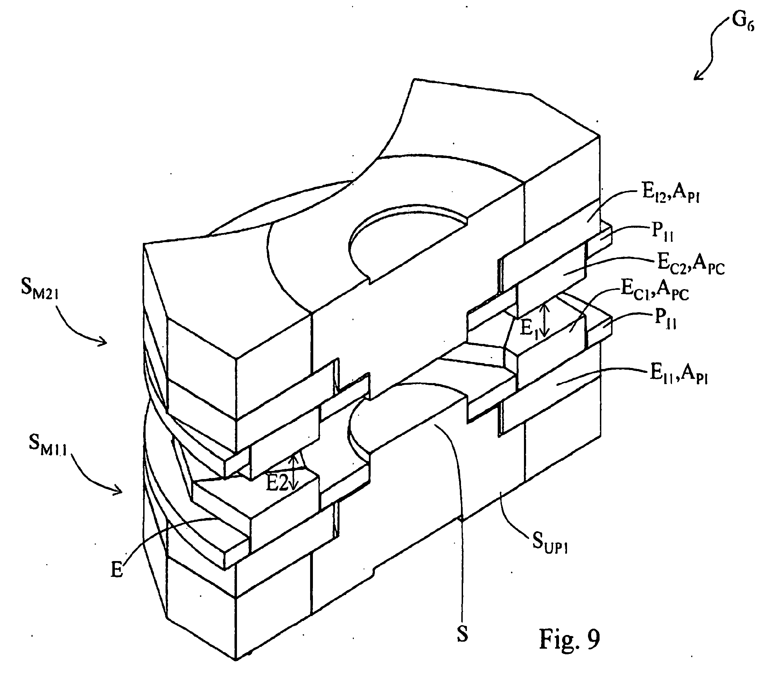

Les figures 8 et 9 représentent une variante de réalisation dans laquelle le générateur de champ magnétique G₆ se distingue de celui des figures 1 et 2 par la présence d'une pièce d'isolation thermique et/ou phonique P_{I1} sous la forme d'un disque emmanché sur les étages concentrateurs E_{C1}, E_{C2} des premier A_{M1} et second A_{M2} assemblages magnétisants de la première S_{M11} et de la seconde S_{M21} structures magnétisantes. Ce disque P_{I1} est plan, parallèle au plan P et réalisé en une matière comportant un très faible coefficient de conductivité thermique, telle qu'une matière plastique, par exemple. Dans l'exemple illustré, les premier A_{M1} et second A_{M2} assemblages magnétisants comportent deux étages E_{I1}, E_{I2}, E_{C1}, E_{C2} d'aimants permanents A_{P1}, A_{PC}, de sorte que le disque P_{I1} repose sur l'étage initiateur E_{I1}, E_{I2}. De plus, le disque P_{I1} comporte des évidements E de forme complémentaire aux étages concentrateurs E_{C1}, E_{C2} permettant un emmanchement sur ces derniers. Ce disque P_{I1} permet d'isoler thermiquement les entrefers E₁, E₂ par rapport à l'environnement extérieur et d'éviter l'effet de ventilation dans lesdits entrefers E₁, E₂ dû à la rotation du générateur G₆. De cette manière, l'influence thermique de l'environnement extérieur sur les éléments magnétocaloriques qui sont placés dans les entrefers E₁, E₂ est limitée, voire inexistante.

Dans une variante non représentée, la face du disque P_{I1} située dans l'entrefer E₁, E₂ peut être au même niveau que les faces actives F_{A1}, F_{A2} des premier A_{M1} et second A_{M2} assemblages magnétisants sur lesquels ledit disque P_{I1} est positionné. En d'autres termes, le disque P_{I1} d'isolation thermique et/ou phonique peut présenter sensiblement la même hauteur (selon l'axe longitudinal L) que l'étage concentrateur E_{C1}, E_{C2} correspondant. Cette variante permet encore de réduire le brassage d'air dans les entrefers et d'assurer une isolation thermique améliorée.

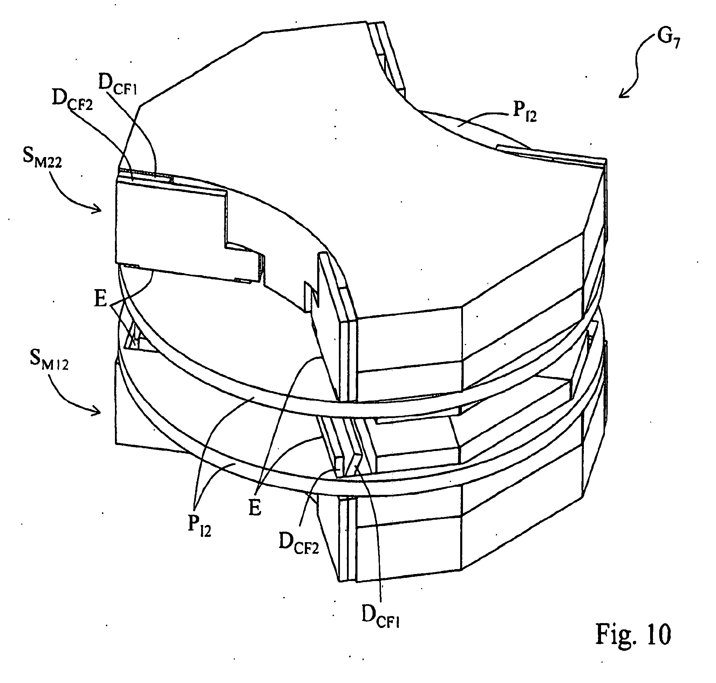

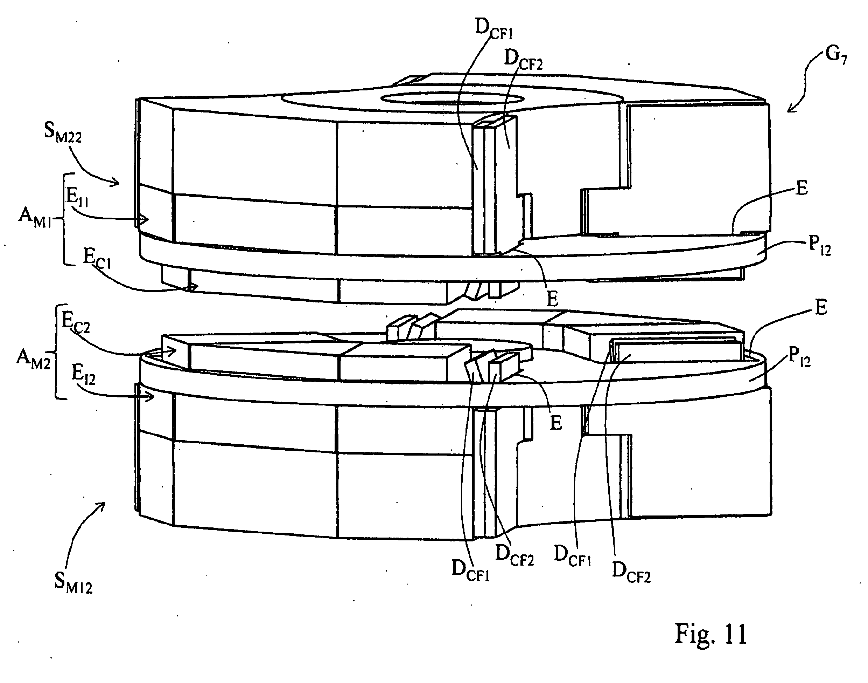

Bien entendu, il est possible d'associer le montage de tels disques P_{I1} avec une variante de générateur G₂, G₃, G₄, G₅ comportant des dispositifs D_{CF1}, D_{CF2}, D_{CF3} agencés pour contenir le flux de champ magnétique. A cet effet, les figures 10 et 11 représentent une variante de réalisation dans laquelle le générateur de champ magnétique G₇ se distingue de celui des figures 8 et 9 par un disque P_{I2} qui comporte des évidements élargis E pour le passage également des plaques D_{CF1}, D_{CF2} destinées à contenir le flux magnétique dans l'enceinte du générateur G₇.

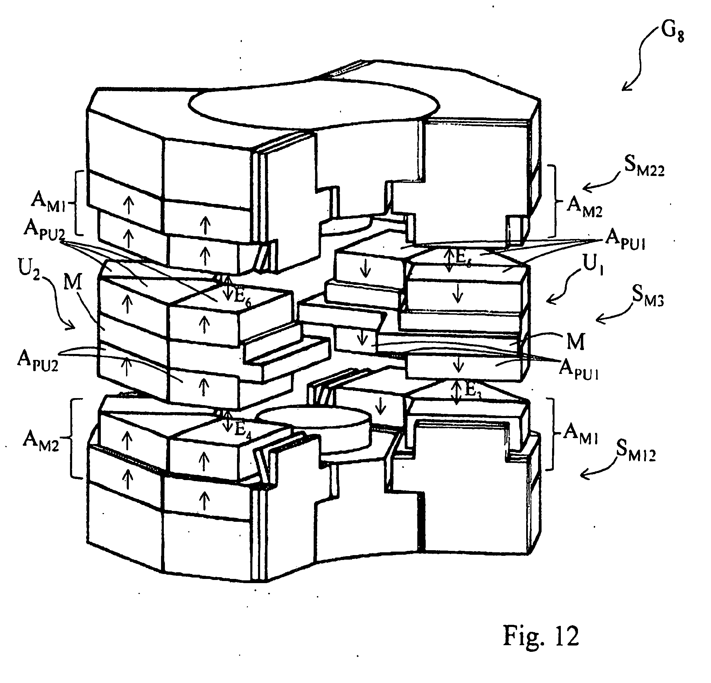

La figure 12 représente une autre variante de réalisation dans laquelle le générateur de champ magnétique G₈ définit quatre entrefers E₃, E₄, E₅, E₆. Ce générateur G₈ présente la configuration du générateur G₂ de la figure 3 dans lequel une troisième structure magnétisante S_{M3} est interposée dans le plan central P, entre la première S_{M12} et la seconde S_{M22} structures magnétisantes. Cette troisième structure magnétisante S_{M3} comporte deux unités magnétisantes U₁, U₂ disposées respectivement entre les premier A_{M1} et second A_{M2} assemblages magnétisants desdites première S_{M12} et seconde S_{M22} structures magnétisantes. Ainsi, une unité magnétisante U₁ est disposée entre le premier assemblage magnétisant A_{M1} de la première structure magnétisante S_{M12} et le second assemblage magnétisant A_{M2} de la seconde structure magnétisante S_{M22} et une autre unité magnétisante U₂ est disposée entre le second assemblage magnétisant A_{M2} de la première structure magnétisante S_{M12} et le premier assemblage magnétisant A_{M1} de la seconde structure magnétisante S_{M22}. Les unités magnétisantes U₁, U₂ comportent des aimants permanents A_{PU1}, A_{PU2} disposés de part et d'autre d'un élément de maintien M partiellement illustré et pouvant se présenter sous la forme d'un disque dont au moins les zones en contact avec les aimants permanents A_{PU1}, A_{PU2} sont en une matière ferromagnétique pour permettre au flux magnétique de circuler entre les deux assemblages magnétiques A_{M1}, A_{M2} en regard. A titre d'exemple, les aimants permanents A_{PU1}, A_{PU2} des unités magnétisantes U₁, U₂ peuvent être constitués par un seul aimant permanent ou par plusieurs aimants permanents. En variante de la structure en sandwich illustrée comprenant des aimants permanents interposés de part et d'autre de l'élément de maintien M, il est possible de prévoir que chaque unité magnétisante U₁, U₂ comporte uniquement un ou des aimants permanents, ces derniers pouvant être maintenus dans le générateur G₈ par une pièce en matière plastique, par exemple. En outre, pour permettre de réaliser une boucle magnétique continue avec un champ magnétique intense, le vecteur d'induction magnétique de chacun des aimants permanents A_{PU1}, A_{PU2} des unités magnétisantes U₁, U₂ présente la même orientation et la même direction que les vecteurs d'induction des premier et second assemblages magnétisants A_{M1}, A_{M2} entre lesquels ils sont disposés.

Le générateur G8 de la figure 12 présente l'avantage de fournir quatre entrefers E₃, E₄, E₅, E₆ superposés deux à deux et diamétralement opposés deux à deux dans un encombrement restreint et avec un poids réduit. Dans cette réalisation également, le flux de champ magnétique circule dans une unique boucle magnétique et entre les assemblages magnétisants A_{M1}, A_{M2} et les unités magnétisantes U₁, U₂, uniquement à travers les entrefers E₃, E₄, E₅, E₆.

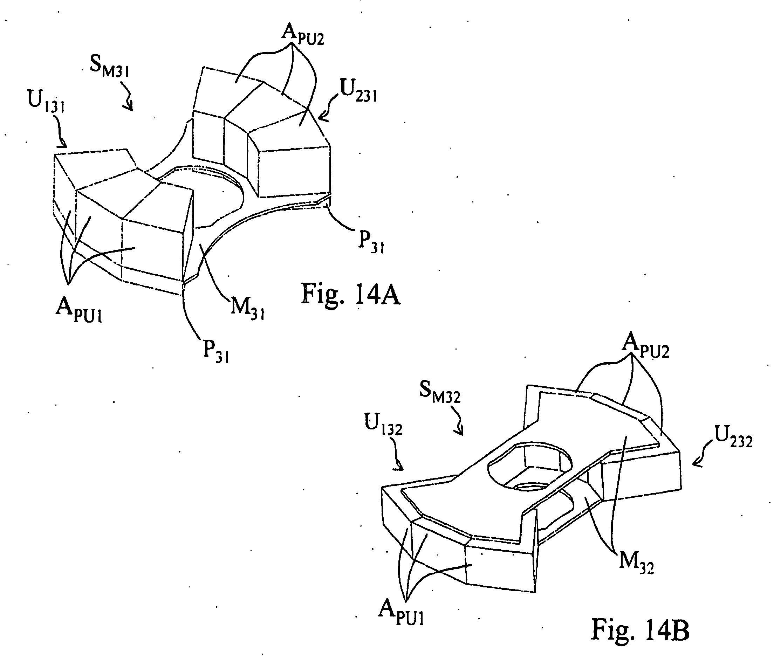

Les figures 14A à 14E représentent des variantes de réalisation de la troisième structure magnétisante S_{M31}, S_{M32}, S_{M33}, S_{M34}, S_{M35}. Ces variantes comportent deux unités magnétisantes U₁₃₁, U₁₃₂, U₁₃₃, U₁₃₄, U_{135,} U₂₃₁, U₂₃₂, U₂₃₃, U_{234,} U₂₃₅ différentes de celles de la troisième structure magnétisante S_{M3} représentée à la figure 12. Elles comportent en effet moins d'aimants permanents et présentent de ce fait l'avantage d'être montées plus facilement et rapidement car moins d'opérations sont nécessaires, tout en conservant la même efficacité que la troisième structure magnétisante S_{M3} représentée à la figure 12. Lesdites unités magnétisantes U_{131,} U₁₃₂, U_{133,} U₁₃₄, U₁₃₅ ; U₂₃₁, U₂₃₂, U_{233,} U₂₃₄, U₂₃₅ sont destinées à être disposées dans un générateur de champ magnétique de la même manière que la troisième structure magnétisant S_{M}3, à savoir respectivement d'une part, entre le premier assemblage magnétisant A_{M1} de la première structure magnétisante S_{M12} et le second assemblage magnétisant A_{M2} de la seconde structure magnétisante S_{M22} et, d'autre part, entre le second assemblage magnétisant A_{M2} de la première structure magnétisante S_{M12} et le premier assemblage magnétisant A_{M1} de la seconde structure magnétisante S_{M22}.

Dans une première variante de la troisième structure magnétisante S_{M31} représentée à la figure 14A, les deux unités magnétisantes U₁₃₁, U₂₃₁ comportent des aimants permanents A_{PU1}, A_{PU2} disposés d'un côté seulement d'un élément de maintien M₃₁ réalisé en une matière ferromagnétique. La forme desdits aimants A_{PU1}, A_{PU2} présentent sensiblement les mêmes dimensions dans le plan central P que la projection dans ledit plan P des aimants des première et seconde structures magnétisantes. L'élément de maintien M₃₁ présente une forme de plaque s'étendant de part et d'autre de l'axe central L sensiblement en forme de queue d'aronde et réalisée en une matière ferromagnétique. Les aimants A_{PU1}, A_{PU2} sont montés et collés sur cet élément de maintien M₃₁. En outre, comme cela est représenté sur la figure 14A, la plaque formant l'élément de maintien M₃₁ peut comporter, sur sa face opposée aux aimants A_{PU1}, A_{PU2}, des parties en saillies, telles des protubérances plates P₃₁ s'étendant vers l'assemblage magnétisant correspondant et présentant, vues en projection dans le plan P, la même surface que celle des aimants A_{PU1}, A_{PU2}. De telles protubérances permettent d'augmenter l'induction magnétique dans les entrefers et d'éviter une saturation magnétique dans la troisième structure magnétisante S_{M31}.

Dans la variante représentée à la figure 14B, la troisième structure magnétisante S_{M32} comporte deux éléments de maintien M₃₂ identiques montés de part et d'autre des aimants permanents A_{PU1}, A_{PU2}. Ces éléments de maintien M₃₂ ne présentent pas de protubérances comme dans l'exemple précédent et sont formés d'une plaque en matière ferromagnétique. De préférence, les aimants permanents A_{PU1}, A_{PU2} sont collés sur au moins l'un desdits éléments de maintien M₃₂ et peuvent être collés également sur l'autre élément de maintien M₃₂ ou simplement positionnés sur ce dernier par attraction magnétique En outre, la surface de la plaque formant chaque élément de maintien M₃₂ peut ne couvrir qu'une partie des aimants permanents A_{PU1}, A_{PU2}, ce qui permet de réduire la quantité de matière nécessaire pour sa fabrication, et de ce fait également son coût de revient, tout en réduisant le poids de la troisième structure magnétisante S_{M32}. En outre, l'élément de maintien M₃₂ peut ne recouvrir qu'une partie discontinue des aimants permanents AP_{U1}, AP_{U2}.

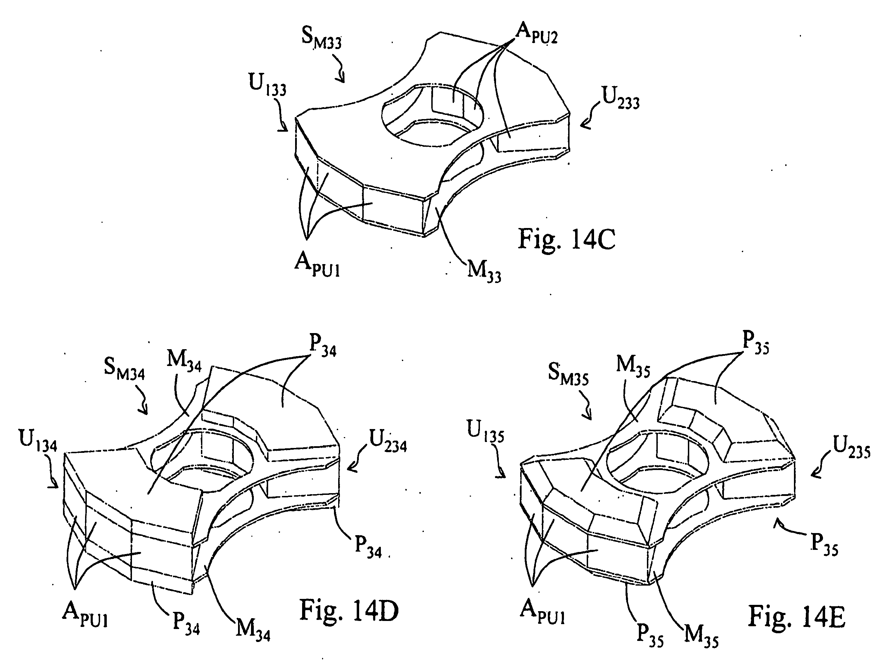

Dans une troisième variante représentée à la figure 14C, la troisième structure magnétisante S_{M33} comporte deux éléments de maintien M₃₃ identiques montés de part et d'autre des aimants permanents A_{PU1}, AP_{U2}. Ces éléments de maintien M₃₃ ne présentent pas de protubérances comme dans l'exemple de la figure 14A et sont formés d'une plaque en matière ferromagnétique. De préférence, les aimants permanents A_{PU1}, A_{PU2} sont collés sur au moins l'un desdits éléments de maintien M₃₃ et simplement positionnés sur l'autre élément de maintien M₃₃.

La variante de la figure 14D représente la configuration de la figure 14C dans laquelle les éléments de maintien M₃₄ de la troisième structure magnétisante S_{M34} présentent des protubérances P₃₄ telles que celles représentées à la figure 14A et offrant les mêmes avantages.

La troisième structure magnétisante S_{M35} réalisée selon une cinquième variante et représentée à la figure 14E se distingue de celle de la figure 14D par le chanfrein ou forme sensiblement pyramidale des protubérances P₃₅ des éléments de maintien M₃₅. Une telle configuration permet de favoriser la concentration du flux magnétique dans un volume plus restreint.

Le générateur de champ magnétique G₉ représenté à la figure 15 illustre une variante de réalisation de celle représentée à la figure 12, qui comporte la troisième structure magnétisante S_{M32} représentée à la figure 14B. Dans cet exemple, les assemblages magnétisants A_{M19} et A_{M29} ne comportent qu'un seul étage Eu d'aimants permanents A_{PU}, avec une face active F_{A1}, F_{A2} située dans les entrefers E₇, E₈, E₉, E₁₀. La face passive F_{P1}, F_{P2} d'un assemblage magnétisant A_{M19}, A_{M29} correspond à la face des aimants A_{PU} de l'étage unique Eu en contact avec le support S_{UP9}. La troisième structure magnétisante S_{M32} permet de créer quatre entrefers dans un volume optimisé. En comparaison avec le générateur magnétique G₈ représenté à la figure 12, ce générateur de champ magnétique G₉ peut être réalisé de manière plus économique car il comporte moins de pièces et permet un montage plus rapide, en plus d'être plus léger, et moins couteux en matière.

L'ensemble des générateurs G₁, G₂, G₃, G₄, G₅, G₆, G₇, G₈ représentés comportent deux étages d'aimants permanents, à savoir un étage initiateur E₁₁, E₁₂ et un étage concentrateur E_{C1}, E_{C2}. L'invention n'est pourtant pas liée à ce nombre d'étages. En effet, selon les besoins en champ magnétique dans les entrefers E₁, E₂, E₃, E₄, E₅, E₆ il est possible d'envisager d'intégrer plus de deux étages d'aimants permanents dans assemblages magnétisants A_{M1}, A_{M2} ou moins, comme le générateur G₉ illustré dans la figure 15 ne comportant qu'un seul étage d'aimants permanents E_{U}.

Les différentes variantes de réalisation illustrées dans les figures et décrites peuvent bien entendu être combinées entre elles pour offrir un large panel de combinaisons techniques en fonction des besoins.

De manière générale, il est plus facile et plus économique de réaliser des aimants permanents de petite taille. De plus le champ ou l'induction magnétique dans des aimants permanents de petite taille est plus homogène que dans des aimants permanents de taille plus importante. Les étages d'aimants permanents Aₚₗ, A_{PC.} AP_{U} peuvent comprendre un seul ou plusieurs aimants permanents juxtaposés. Toutefois, étant donné qu'il est techniquement plus facile et économique de réaliser trois aimants permanents polyédriques comportant quatre faces et de les assembler entre eux que de fabriquer un seul aimant de taille plus importante et de forme complexe, cette variante à plusieurs aimants peut être privilégiée. En effet, il est plus simple de magnétiser des petites pièces et le champ magnétique obtenu dans ces dernières est plus intense et plus homogène, ce qui permet d'une part, de réduire les coûts de fabrication et, d'autre part, d'améliorer l'homogénéité et l'intensité du champ magnétique dans les entrefers E₁, E₂, E₃, E₄, E₅, E₆, E₇, E₈, E₉, E₁₀ correspondants. Les générateurs de champ magnétique G₁, G₂, G₃, G₄, G₅, G₆, G₇, G₈, G₉ illustrés par l'ensemble des figures 1 à 12 et 15 sont destinés à être intégrés dans un appareil thermique A_{T} tel que celui représenté schématiquement à la figure 13 et comportant au moins un élément magnétocalorique E_{M}. Cet élément magnétocalorique E_{M} peut être constitué par un ou plusieurs matériaux magnétocaloriques et est traversé ou en contact thermique avec un fluide caloporteur circulant de manière alternée dans deux directions opposées selon la position dudit élément magnétocalorique E_{M} dans et hors d'un entrefer E₁, E₂, E₃, E₄, E₅, E₆, E₇, E₈, E₉, E₁₀. Les moyens de mise en circulation du fluide caloporteur ne sont pas représentés.

Les générateurs de champ magnétique G₁, G₂, G₃, G₄, G₅, G₆, G₇, G₈, G₉ représentés comportent au moins deux entrefers E₁, E₂, E₃, E₄, E₅, E₆, E₇, E₈, E₉, E₁₀, diamétralement opposés, ce qui permet également de solliciter magnétiquement au moins deux éléments magnétocaloriques E_{M}, et donc d'accroître le rendement d'un tel appareil thermique A_{T} comprenant ledit générateur de champ magnétique G₁, G₂, G₃, G₄, G₅, G₆, G₇, G₈, G₉, ceci, tout en conservant un encombrement compact et réduit.

De préférence, l'élément magnétocalorique E_{M} et le générateur de champ magnétique G₁, G₂, G₃, G₄, G₅, G₆, G₇, G₈, G₉ sont montés selon un mouvement relatif de l'un par rapport à l'autre de sorte que ledit élément magnétocalorique E_{M} puisse entrer et sortir alternativement d'un entrefer E₁, E₂, E₃, E₄, E₅, E₆, E₇, E₈, E₉, E₁₀. Ce changement de position peut être obtenu par une rotation continue ou séquentielle ou encore par un mouvement de rotation en va-et-vient du générateur de champ magnétique G₁, G₂, G₃, G₄, G₅, G₆, G₇, G₈, G₉ par rapport audit élément magnétocalorique E_{M} ou inversement du disque portant les éléments magnétocaloriques E_{M} par rapport audit générateur de champ magnétique.

Avantageusement, l'invention permet d'obtenir un champ magnétique élevé d'environ 1 Tesla dans chaque entrefer E₁, E₂, E₃, E₄, E₅, E₆, E₇, Es, E₉, E₁₀ grâce à l'utilisation d'aimants permanents dont la rémanence magnétique (induction magnétique) est comprise entre 0,8 et 1,4 teslas. Ceci est d'autant plus surprenant que les entrefers sont larges à l'inverse des entrefers étroits dans les générateurs de champ magnétique connus, et notamment présentent une hauteur correspondant au minimum à environ un tiers de la hauteur d'un des étages d'aimants permanents.

### Possibilités d'application industrielle :

Il ressort clairement de cette description que l'invention permet d'atteindre les buts fixés, à savoir proposer un générateur de champ magnétique dont la réalisation est structurellement simple, économique, compacte et qui permet d'obtenir un champ magnétique intense et uniforme, d'environ un Tesla dans un appareil thermique magnétocalorique A_{T} à structure rotative. Un tel générateur de champ magnétique peut notamment trouver une application aussi bien industrielle que domestique lorsqu'il est intégré dans un appareil thermique magnétocalorique A_{T} destiné à être exploité dans le domaine du chauffage, de la climatisation, du tempérage, du refroidissement ou autres, à des coûts compétitifs et avec un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur de champ magnétique (G₁, G₂, G₃, G₄, G₅, G₆, G₇, G₈, G₉) pour un appareil thermique magnétocalorique (A_{T}) à structure rotative, ledit générateur de champ magnétique (G₁, G₂, G₃, G₄, G₅, G₆, G₇, G₈, G₉) comportant une première (S_{M11}, S_{M12}, S_{M13}, S_{M14}, S_{M15}, S_{M19}) et une seconde (S_{M21}, S_{M22}, S_{M29}) structures magnétisantes identiques, montées tête-bêche, en regard l'une de l'autre, parallèlement de part et d'autre d'un plan central (P), et agencées pour définir au moins deux entrefers (E₁, E₂, E₃, E₄, E₅, E₆, E₇, E₈, E₉, E₁₀) situés dans un même plan et diamétralement opposés, chaque structure magnétisante (S_{M11}, S_{M12}, S_{M13}, S_{M14}, S_{M15}, S_{M19}, S_{M21}, S_{M22}, S_{M29}) comportant un premier (A_{M1}, A_{M19}) et un second (A_{M2}, A_{M29}) assemblages magnétisants structurellement identiques, diamétralement opposés, dont les vecteurs d'induction sont orientés dans des directions opposées, montés sur un support (S_{UP1}, S_{UP2}, S_{UP3}, S_{UP4}, S_{UP9}) réalisé en au moins un matériau ferromagnétique, et délimitant lesdits entrefers, **caractérisé en ce que** les premier (A_{M1}, A_{M19}) et second (A_{M2}, A_{M29}) assemblages magnétisants présentent chacun une structure d'aimants permanents (A_{PI}, A_{PC}, A_{PU}) dont les vecteurs d'induction magnétique sont sensiblement perpendiculaires au plan central (P), et comportant une face passive (F_{P1}, F_{P2}) et une face active (F_{A1}, F_{A2}), ladite face active (F_{A1}, F_{A2}) délimitant lesdits entrefers, et **en ce que** les vecteurs d'induction des premiers (A_{M1}, A_{M19}) et seconds (A_{M2}, A_{M29}) assemblages magnétisants forment à l'intérieur dudit générateur une boucle unique de circulation d'un champ magnétique à travers lesdits supports (S_{UP1}, S_{UP2}, S_{UP3}, S_{UP4}, S_{UP9}) et lesdits entrefers (E₁, E₂, E₃, E₄, E₅, E₆, E₇, E₈, E₉, E₁₀).

2. Générateur de champ magnétique (G₁, G₂, G₃, G₄, G₅, G₆, G₇, G₈,) selon la revendication 1, **caractérisé en ce que** ladite structure d'aimants permanents (A_{PI}, A_{PC}) est une structure étagée comportant au moins deux étages (En, E₁₂, E_{C1}, E_{C2}) d'aimants permanents (A_{PI}, A_{PC}), **en ce que** lesdits étages (E₁₁, E₁₂, E_{C1}, E_{C2}) sont superposés de manière concentrique et comportent un premier étage d'aimants permanents, dit étage initiateur (E₁₁, E₁₂) de flux magnétique formant ladite face passive (F_{P1}, F_{P2}) des premier (A_{M1}) et second (A_{M2}) assemblages magnétisants, et un second étage d'aimants permanents, dit étage concentrateur (E_{C1}, E_{C2}) de flux magnétique formant ladite face active (F_{A1}, F_{A2}) des premier (A_{M1}) et second (A_{M2}) assemblages magnétisants délimitant lesdits entrefers.

3. Générateur, selon la revendication 1, **caractérisé en ce que** chaque structure magnétisante (S_{M12}, S_{M13}, S_{M14}, S_{M15}, S_{M22}) comporte un dispositif (D_{CF1}, D_{CF2}, D_{CF3}) agencé pour contenir le champ magnétique dans le volume délimité par ledit générateur (G₂, G₃, G₄, G₅, G₇).

4. Générateur, selon la revendication 3, **caractérisé en ce que** ledit dispositif agencé pour contenir le champ magnétique comprend au moins une plaque (D_{CF1}, D_{CF2}) réalisée en une matière ferromagnétique, disposée contre la face latérale correspondante du support (S_{UP1}, S_{UP2}, S_{UP3}) et s'étendant en direction de l'entrefer (E₁, E₂) correspondant.

5. Générateur, selon la revendication 2, **caractérisé en ce qu'**une pièce d'isolation thermique (P₁₁, P₁₂) plane, parallèle au plan central (P) est montée sur chaque structure magnétisante (S_{M11}, S_{M12}, S_{M21}, S_{M22}) et emmanchée sur les étages concentrateurs (E_{C1}, E_{C2}) correspondants.

6. Générateur, selon la revendication 1, **caractérisé en ce qu'**il comprend une troisième structure magnétisante (S_{M3}, S_{M31}, S_{M32}, S_{M33}, S_{M34}, S_{M35}) interposée dans le plan central (P), entre la première (S_{M12}, S_{M19}) et la seconde (S_{M22}, S_{M29}) structures magnétisantes, ladite troisième structure magnétisante (S_{M3}, S_{M31}, S_{M32}, S_{M33}, S_{M34}, S_{M35}) comportant deux unités magnétisantes (U₁, U₁₃₁, U₁₃₂, U₁₃₃, U₁₃₄, U₁₃₅, U₂, U₂₃₁, U₂₃₂, U₂₃₃, U₂₃₄, U₂₃₅) disposées respectivement entre les premier (A_{M1}, A_{M19}) et second (A_{M2}, A_{M29}) assemblages magnétisants desdites première (S_{M12}, S_{M19}) et seconde (S_{M22}, S_{M29}) structures magnétisantes pour délimiter quatre entrefers (E₃, E₄, E₅, E₆, E₇, E₈, E₉, E₁₀).

7. Générateur, selon la revendication 6, **caractérisé en ce que** chaque unité magnétisante (U₁, U₁₃₁, U₁₃₂, U₁₃₃, U₁₃₄, U₁₃₅, U₂, U₂₃₁, U₂₃₂, U₂₃₃, U₂₃₄, U₂₃₅) comporte au moins un aimant permanent (A_{PU1}, A_{PU2}) dont le vecteur d'induction magnétique présente le même sens et la même direction que le vecteur d'induction magnétique des assemblages magnétisants (A_{M1}, A_{M2}) entre lesquels ladite unité magnétisante (U₁, U₁₃₁, U₁₃₂, U₁₃₃, U₁₃₄, U₁₃₅, U₂, U₂₃₁, U₂₃₂, U₂₃₃, U₂₃₄, U₂₃₅) est positionnée.

8. Générateur, selon la revendication 6, **caractérisé en ce que** les unités magnétisantes (U₁, U₂) comportent des aimants permanents (A_{PU1}, A_{PU2}) disposés de part et d'autre d'un élément de maintien (M, M₃₁, M₃₂, M₃₃, M₃₄, M₃₅) réalisé en une matière ferromagnétique.

9. Générateur, selon la revendication 6, **caractérisé en ce que** les unités magnétisantes (U₁, U₂) comportent des aimants permanents (A_{PU1}, A_{PU2}) disposés entre deux éléments de maintien (M, M₃₁, M₃₂, M₃₃, M₃₄, M₃₅) identiques et parallèles entre eux et réalisés en une matière ferromagnétique.

10. Appareil thermique (A_{T}) magnétocalorique à structure rotative, muni d'au moins un disque comportant des éléments magnétocaloriques (E_{M}) et d'au moins un générateur de champ magnétique (G₁, G₂, G₃, G₄, G₅, G₆, G₇, G₈, G₉) selon l'une quelconque des revendications précédentes, ledit générateur comportant une première (S_{M11}, S_{M12}, S_{M13}, S_{M14}, S_{M15}, S_{M19}) et une seconde (S_{M21}, S_{M22}, S_{M29}) structures magnétisantes identiques, montées tête-bêche, en regard l'une de l'autre, parallèlement de part et d'autre d'un plan central (P), et agencées pour définir au moins deux entrefers (E₁, E₂, E₃, E₄, E₅, E₆, E₇, E₈, E₉, E₁₀) situés dans un même plan et diamétralement opposés, chaque structure magnétisante (S_{M11}), S_{M12}, S_{M13}, S_{M14}, S_{M15}, S_{M19}, S_{M21}, S_{M22}, S_{M29}) comportant un premier (A_{M1}, A_{M19}) et un second (A_{M2}, A_{M29}) assemblages magnétisants structurellement identiques, diamétralement opposés, dont les vecteurs d'induction sont orientés dans des directions opposées, montés sur un support (S_{UP1}, S_{UP2}, S_{UP3}, S_{UP4}, S_{UP9}) réalisé en au moins un matériau ferromagnétique, et délimitant lesdits entrefers entre lesquels ledit au moins un disque portant lesdits éléments magnétocaloriques (E_{M}) est positionné, appareil **caractérisé en ce que** les premier (A_{M1}, A_{M19}) et second (A_{M2}, A_{M29}) assemblages magnétisants de chaque structure magnétisante présentent chacun une structure d'aimants permanents (A_{P1}, A_{PC}, A_{PU}) dont les vecteurs d'induction magnétique sont sensiblement perpendiculaires au plan central (P) et comportant une face passive (F_{P1}, F_{P2}) et une face active (F_{A1}, F_{A2}), ladite face active délimitant lesdits entrefers, et **en ce que** les vecteurs d'induction des premiers (A_{M1}, A_{M19}) et seconds (A_{M2}, A_{M29}) assemblages magnétisants forment à l'intérieur dudit générateur une boucle unique de circulation d'un champ magnétique à travers lesdits supports (S_{UP1}, S_{UP2}, S_{UP3}, S_{UP4}, S_{UP9}) et lesdits entrefers (E₁, E₂, E₃, E₄, E₅, E₆, E₇, E₈, E₉, E₁₀).

11. Appareil thermique (A_{T}) selon la revendication 10, **caractérisé en ce que** ladite structure d'aimants permanents(A_{PI}, A_{PC}) est une structure étagée comportant au moins deux étages (E₁₁, E₁₂, E_{C1}, E_{C2}) d'aimants permanents (A_{PI}, A_{PC}), **en ce que** lesdits étages (E₁₁, E₁₂, E_{C1}, E_{C2}) sont superposés de manière concentrique et comportent un premier étage d'aimants permanents, dit étage initiateur (E₁₁, E₁₂) de flux magnétique formant ladite face passive (F_{P1}, F_{P2}) des premier (A_{M1}) et second (A_{M2}) assemblages magnétisants, et un second étage d'aimants permanents, dit étage concentrateur (E_{C1}), E_{C2}) de flux magnétique formant ladite face active (F_{A1}, F_{A2}) des premier (A_{M1}) et second (A_{M2}) assemblages magnétisants délimitant lesdits entrefers.

12. Appareil thermique (A_{T}) selon la revendication 10 ou la revendication 11, **caractérisé en ce que** ledit générateur de champ magnétique (G₁, G₂, G₃, G₄, G₅, G₆, G₇, G₈, G₉) comprend une troisième structure magnétisante (S_{M3}, S_{M3}), S_{M32}, S_{M33}, S_{M34}, S_{M35}) interposée dans le plan central (P), entre la première (S_{M12}) et la seconde (S_{M22}) structures magnétisantes, ladite troisième structure magnétisante (S_{M3}, S_{M3}, S_{M32}, S_{M33}, S_{M34}, S_{M35}) comportant deux unités magnétisantes (U₁, U₁₃₁, U₁₃₂, U₁₃₃, U₁₃₄, U₁₃₅, U₂, U₂₃₁, U₂₃₂, U₂₃₃, U₂₃₄, U₂₃₅) disposées respectivement entre les premier (A_{M1}) et second (A_{M2}) assemblages magnétisants desdites première (S_{M12}) et seconde (S_{M22}) structures magnétisantes pour délimiter quatre entrefers (E₃, E₄, E₅, E₆).

## Patentansprüche

1. Magnetfeldgenerator (G₁, G₂, G₃, G₄, G₅, G₆, G₇, G₈, G₉) für eine magnetokalorische thermische Vorrichtung (A_{T}) mit einer drehenden Struktur, wobei besagter Magnetfeldgenerator (G₁, G₂, G₃, G₄, G₅, G₆, G₇, G₈, G₉) eine erste (S_{M11}, S_{M12}, S_{M13}, S_{M14}, S_{M15}, SM₁₉) und eine zweite (S_{M21}, S_{M22}, SM₂₉) identische Magnetisierungsstruktur beträgt, die entgegengesetzt, sich gegenüber liegend, parallel beidseitig einer zentralen Ebene (P) angeordnet sind, und ausgelegt sind, um zumindest zwei Luftspalte (E₁, E₂, E₃, E₄, E₅, E₆, E₇, E₈, E₉, E₁₀) zu bilden, die sich in einer selben Ebene befinden und diametral entgegengesetzt sind, wobei jede Magnetisierungsstruktur (S_{M11}, S_{M12}, S_{M13}, S_{M14}, S_{M15}, SM₁₉, S_{M21}, S_{M22}, SM₂₉) eine erste (A_{M1}, A_{M19}) und eine zweite (A_{M2}, A_{M29}) strukturell identische und zueinander diametral entgegengesetzte Magnetisierungs-Baugruppe beträgt, deren Induktionsvektoren in entgegengesetzte Richtungen orientiert sind, die auf einen aus zumindest einem ferromagnetischen Material hergestellten Träger (S_{UP1}, S_{UP2}, S_{UP3}, S_{UP4}, S_{UP9}) montiert sind und besagte Luftspalte abgrenzen, **dadurch gekennzeichnet, dass** die erste (A_{M1}, A_{M19}) und die zweite (A_{M2}, A_{M29}) Magnetisierungs-Baugruppe jeweils eine Struktur aus Permanentmagneten (A_{PI}, A_{PC}, A_{PU}) aufweisen, deren magnetische Induktionsvektoren merklich rechtwinklig zur zentralen Ebene (P) ausgerichtet sind, und die eine passive Seite (F_{P1}, F_{P2}) und eine aktive Seite (F_{A1}, F_{A2}) betragen, wobei besagte aktive Seite (F_{A1}, F_{A2}) besagte Luftspalte abgrenzt, und dadurch, dass die Induktionsvektoren der ersten (A_{M1}, A_{M19}) und zweiten (A_{M2}, A_{M29}) Magnetisierungs-Baugruppen innerhalb von besagtem Generator eine einzige Zirkulationsschleife für ein Magnetfeld durch besagte Träger (S_{UP1}, S_{UP2}, S_{UP3}, S_{UP4}, S_{UP9}) und besagte Luftspalte (E₁, E₂, E₃, E₄, E₅, E₆, E₇, E₈, E₉, E₁₀) hindurch bilden.

2. Magnetfeldgenerator (G₁, G₂, G₃, G₄, G₅, G₆, G₇, G₈,) nach Anspruch 1, **dadurch gekennzeichnet, dass** besagte Struktur aus Permanentmagneten (A_{PI}, A_{PC}) eine abgestufte Struktur ist, die zumindest zwei Stufen (E₁₀, E_{I1}, E_{C1}, E_{C2}) Permanentmagneten (A_{PI}, A_{PC}) beträgt, dadurch, dass besagte Stufen (E_{I1}, E_{I2}, E_{C1}, E_{C2}) konzentrisch übereinander angeordnet sind und eine erste, als Magnetfluss-Initiatorstufe (E_{I1}, E_{I2}) bezeichnete Stufe Permanentmagneten betragen, die die besagte passive Seite (F_{P1}, FP₂) der ersten (A_{M1}) und der zweiten (A_{M2}) Magnetisierungs-Baugruppe bildet, sowie eine zweite, als Magnetfluss-Konzentratorstufe (E_{C1}, E_{C2}) bezeichnete Stufe Permanentmagneten, die die besagte aktive Seite (F_{A1}, F_{A2}) der ersten (A_{M1}) und der zweiten (A_{M2}) Magnetisierungs-Baugruppe bildet, die besagte Luftspalte abgrenzen.

3. Generator nach Anspruch 1, **dadurch gekennzeichnet, dass** jede Magnetisierungsstruktur (S_{M12}, S_{M13}, S_{M14}, S_{M15}, S_{M22}) eine Vorrichtung (D_{CF1}, D_{CF2}, D_{CF3}) beträgt, die ausgelegt ist, um das Magnetfeld innerhalb des durch besagten Generator (G₂, G₃, G₄, G₅, G₇) abgegrenzten Volumens zurück zu halten.

4. Generator nach Anspruch 3, **dadurch gekennzeichnet, dass** besagte zum Zurückhalten des Magnetfelds ausgelegte Vorrichtung zumindest eine aus einem ferromagnetischen Material hergestellte Platte (D_{CF1}, D_{CF2}) beträgt, die gegen die entsprechende Seitenfläche von Träger (S_{UP1}, S_{UP2}, S_{UP3}) angeordnet ist und sich in Richtung des entsprechenden Luftspalts (E₁, E₂) erstreckt.

5. Generator nach Anspruch 2, **dadurch gekennzeichnet, dass** ein flaches, parallel zur zentralen Ebene (P) angeordnetes Wärmedämmungs-Element (P_{I1}, P_{I2}) auf jede Magnetisierungsstruktur (S_{M11}, S_{M12}, S_{M21}, S_{M22}) montiert ist und auf die entsprechenden Konzentratorstufen (E_{C1}, E_{C2}) aufgepresst ist.

6. Generator nach Anspruch 1, **dadurch gekennzeichnet, dass** er eine dritte Magnetisierungsstruktur (S_{M3}, S_{M31}, S_{M32}, S_{M33}, S_{M34}, S_{M35}) beträgt, die in der zentralen Ebene (P) zwischen der ersten (S_{M12}, S_{M19}) und der zweiten (S_{M22}, S_{M29}) Magnetisierungsstruktur angeordnet ist, wobei besagte dritte Magnetisierungsstruktur (S_{M3}, S_{M31}, S_{M32}, S_{M33}, S_{M34}, S_{M35}) zwei Magnetisierungs-Einheiten (U₁, U₁₃₁, U₁₃₂, U₁₃₃, U₁₃₄, U₁₃₅, U₂, U₂₃₁, U₂₃₂, U₂₃₃, U₂₃₄, U₂₃₅) beträgt, die zwischen den ersten (A_{M1}, A_{M19}) beziehungsweise den zweiten (A_{M2}, A_{M29}) Magnetisierungs-Baugruppen von besagter ersten (S_{M12}, S_{M19}) und zweiten (S_{M22}, S_{M29}) Magnetisierungsstruktur angeordnet sind, um vier Luftspalte (E₃, E₄, E₅, E₆, E₇, E₈, E₉, E₁₀) abzugrenzen.

7. Generator nach Anspruch 6, **dadurch gekennzeichnet, dass** jede Magnetisierungs-Einheit (U₁, U₁₃₁, U₁₃₂, U₁₃₃, U₁₃₄, U₁₃₅, U₂, U₂₃₁, U₂₃₂, U₂₃₃, U₂₃₄, U₂₃₅) zumindest einen Permanentmagneten (A_{PU1}, A_{PU2}) beträgt, dessen magnetischer Induktionsvektor die gleiche Orientierung und Richtung als der magnetische Induktionsvektor der Magnetisierungs-Baugruppen (A_{M1}, A_{M2}) aufweist, zwischen denen besagte Magnetisierungs-Einheit (U₁, U₁₃₁, U₁₃₂, U₁₃₃, U₁₃₄, U₁₃₅, U₂, U₂₃₁, U₂₃₂, U₂₃₃, U₂₃₄, U₂₃₅) positioniert ist.

8. Generator nach Anspruch 6, **dadurch gekennzeichnet, dass** die Magnetisierungs-Einheiten (U₁, U₂) Permanentmagneten (A_{PU1}, A_{PU2}) betragen, die beidseitig eines aus einem ferromagnetischen Material hergestellten Tragelements (M, M₃₁, M₃₂, M₃₃, M₃₄, M₃₅) angeordnet sind.

9. Generator nach Anspruch 6, **dadurch gekennzeichnet, dass** die Magnetisierungs-Einheiten (U₁, U₂) Permanentmagneten (A_{PU1}, A_{PU2}) betragen, die zwischen zwei identischen, zueinander parallelen und aus einem ferromagnetischen Material hergestellten Tragelementen (M, M₃₁, M₃₂, M₃₃, M₃₄, M₃₅) angeordnet sind.

10. Magnetokalorische thermische Vorrichtung (A_{T}) mit einer drehenden Struktur, versehen mit zumindest einer Scheibe mit magnetokalorischen Elementen (E_{M}) und zumindest einem Magnetfeldgenerator (G₁, G₂, G₃, G₄, G₅, G₆, G₇, G₈, G₉) nach einem beliebigen der vorhergehenden Ansprüche, wobei besagter Generator eine erste (S_{M11}, S_{M12}, S_{M13}, S_{M14}, S_{M15}, S_{M19}) und eine zweite (S_{M21}, S_{M22}, S_{M29}) identische Magnetisierungsstruktur beträgt, die entgegengesetzt, sich gegenüber liegend, parallel beidseitig einer zentralen Ebene (P) angeordnet sind, und ausgelegt sind, um zumindest zwei Luftspalte (E₁, E₂, E₃, E₄, E₅, E₆, E₇, E₈, E₉, E₁₀) zu bilden, die sich in einer selben Ebene befinden und diametral entgegengesetzt sind, wobei jede Magnetisierungsstruktur (S_{M11}, S_{M12}, S_{M1}, S_{M14}, S_{M15}, S_{M19}, S_{M21}, S_{M22}, S_{M29}) eine erste (A_{M1}, A_{M19}) und eine zweite (A_{M2}, A_{M29}) strukturell identische und zueinander diametral entgegengesetzte Magnetisierungs-Baugruppe beträgt, deren Induktionsvektoren in entgegengesetzte Richtungen orientiert sind, die auf einen aus zumindest einem ferromagnetischen Material hergestellten Träger (S_{UP1}, S_{UP2}, S_{UP3}, S_{UP4}, S_{UP9}) montiert sind, und besagte Luftspalte abgrenzen, zwischen denen besagte zumindest eine Scheibe mit besagten magnetokalorischen Elementen (E_{M}) positioniert ist, **dadurch gekennzeichnete** Vorrichtung, dass die erste (A_{M1}, A_{M19}) und die zweite (A_{M2}, A_{M29}) Magnetisierungs-Baugruppe jeder Magnetisierungsstruktur jeweils eine Struktur aus Permanentmagneten (A_{PI}, A_{PC.} A_{PU}) aufweisen, deren magnetische Induktionsvektoren merklich rechtwinklig zur zentralen Ebene (P) ausgerichtet sind, und die eine passive Seite (F_{P1}, F_{P2}) und eine aktive Seite (F_{A1}, F_{A2}) betragen, wobei besagte aktive Seite besagte Luftspalte abgrenzt, und dadurch, dass die Induktionsvektoren der ersten (A_{M1}, A_{M19}) und zweiten (A_{M2}, A_{M29}) Magnetisierungs-Baugruppen innerhalb von besagtem Generator eine einzige Zirkulationsschleife für ein Magnetfeld durch besagte Träger (S_{UP1}, S_{UP2}, S_{UP3}, S_{UP4}, S_{UP9}) und besagte Luftspalte (E₁, E₂, E₃, E₄, E₅, E₆, E₇, E₈, E₉, E₁₀) hindurch bilden.

11. Thermische Vorrichtung (A_{T}) nach Anspruch 10, **dadurch gekennzeichnet, dass** besagte Struktur aus Permanentmagneten (A_{PI}, A_{PC}) eine abgestufte Struktur ist, die zumindest zwei Stufen (E_{I1}, E_{I2}, E_{C1}, E_{C2}) Permanentmagneten (A_{PI}, A_{PC}) beträgt, dadurch, dass besagte Stufen (E_{I1}, E_{I2}, E_{C1}, E_{C2}) konzentrisch übereinander angeordnet sind und eine erste, als Magnetfluss-Initiatorstufe (E_{I1}, E_{I2}) bezeichnete Stufe Permanentmagneten betragen, die die besagte passive Seite (F_{P1}, F_{P2}) der ersten (A_{M1}) und der zweiten (A_{M2}) Magnetisierungs-Baugruppe bildet, sowie eine zweite, als Magnetfluss-Konzentratorstufe (E_{C1}, E_{C2}) bezeichnete Stufe Permanentmagneten, die die besagte aktive Seite (F_{A1}, F_{A2}) der ersten (A_{M1}) und der zweiten (A_{M2}) Magnetisierungs-Baugruppe bildet, die besagte Luftspalte abgrenzen.

12. Thermische Vorrichtung (A_{T}) nach Anspruch 10 oder Anspruch 11, **dadurch gekennzeichnet, dass** besagter Magnetfeldgenerator (G₁, G₂, G₃, G₄, G₅, G₆, G₇, G₈, G₉) eine dritte Magnetisierungsstruktur (S_{M3}, S_{M31}, S_{M32}, S_{M33}, S_{M34}, S_{M35}) beträgt, die in der zentralen Ebene (P) zwischen der ersten (S_{M12}) und der zweiten (S_{M22}) Magnetisierungsstruktur angeordnet ist, wobei besagte dritte Magnetisierungsstruktur (S_{M3}, S_{M31}, S_{M32}, S_{M33}, S_{M34}, S_{M35}) zwei Magnetisierungs-Einheiten (U₁, U₁₃₁, U₁₃₂, U₁₃₃, U₁₃₄, U₁₃₅, U₂, U₂₃₁, U₂₃₂, U₂₃₃, U₂₃₄, U₂₃₅) beträgt, die zwischen den ersten (A_{M1}) beziehungsweise den zweiten (A_{M2}) Magnetisierungs-Baugruppen von besagter ersten (S_{M12}) und zweiten (S_{M22}) Magnetisierungsstruktur angeordnet sind, um vier Luftspalte (E₃, E₄, E₅, E₆) abzugrenzen.

## Claims

1. Magnetic field generator (G₁, G₂**,** G₃, G₄, G₅, G₆, G₇, G₈, G₉) for a magnetocaloric thermal device (A_{T}) with a rotary structure, said magnetic field generator (G₁, G₂, G₃, G₄, G₅, G₆, G₇, G₈, G₉) comprising a first (S_{M11}, S_{M12}, S_{M13}, S_{M14}, S_{M15}, SM₁₉) and a second (S_{M21}, S_{M22}, SM₂₉) identical magnetizing structures mounted head-to-tail, opposite to each other, parallel on either side of a central plane (P) and arranged to define at least two air gaps (E₁, E₂, E₃, E₄, E₅, E₆, E₇, E₈, E₉, E₁₀) located in a same plane and diametrically opposed, each magnetizing structure (S_{M11}, S_{M12}, S_{M13}, S_{M14}, S_{M15}, , SM₁₉, S_{M21}, S_{M22}, SM₂₉) comprising a first (A_{M1}, A_{M19}) and a second (A_{M2}, A_{M29}) structurally identical magnetizing assemblies, diametrically opposed, whose induction vectors are oriented in opposite directions, mounted on a support (S_{UP1}, S_{UP2}, S_{UP3}, S_{UP4}, S_{UP9}) made out of at least one ferromagnetic material and delimiting said air gaps, **characterized in that** the first (A_{M1}, A_{M19}) and second (A_{M2}, A_{M29}) magnetizing assemblies have each a structure with permanent magnets (A_{PI}, A_{PC}, A_{PU}) whose magnetic induction vectors are substantially perpendicular to the central plane (P) and comprising a passive side (F_{P1}, F_{P2}) and an active side (F_{A1}, F_{A2}), said active side (F_{A1}, F_{A2}) delimiting said air gaps, and **in that** the induction vectors of the first (A_{M1}, A_{M19}) and second (A_{M2}, A_{M29}) magnetizing assemblies form inside of said generator one single circulation loop of a magnetic field through said supports (S_{UP1}, S_{UP2}, S_{UP3}, S_{UP4}, S_{UP9}) and said air gaps (E₁, E₂, E₃, E₄, E₅, E₆, E₇, E₈, E₉, E₁₀).

2. Magnetic field generator (G₁, G₂, G₃, G₄, G₅, G₆, G₇, G₈,) according to claim 1, **characterized in that** said permanent magnet structure (A_{PI}, A_{PC}) is a stepped structure comprising at least two stages (E_{I1}, E_{I2}, E_{C1}, E_{C2}) of permanent magnets (A_{PI}, A_{PC}), **in that** said stages (E₁₁, E₁₂, E_{C1}, E_{C2}) are concentrically superposed and comprise a first stage of permanent magnets called magnetic flux initiator stage (EI1, E_{I2}) forming said passive side (F_{P1}, F_{P2}) of the first (A_{M1}) and second (A_{M2}) magnetizing assemblies, and a second stage of permanent magnets called magnetic flux concentrator stage (E_{C1}, E_{C2}) forming said active side (F_{A1}, F_{A2}) of the first (A_{M1}) and second(A_{M2}) magnetizing assemblies delimiting said air gaps.

3. Magnetic field generator according to claim 1, **characterized in that** each magnetizing structure (S_{M12}, S_{M13}, S_{M14}, S_{M15}, S_{M22}) comprises a device (D_{CF1}, D_{CF2}, D_{CF3}) arranged to contain the magnetic field in the volume delimited by said generator (G₂, G₃, G₄, G₅, G₇).

4. Magnetic field generator according to claim 3, **characterized in that** said device arranged to contain the magnetic field comprises at least one plate (D_{CF1}, D_{CF2}) made out of a ferromagnetic material, located against the corresponding lateral side of the support (S_{UP1}, S_{UP2}, S_{UP3}) and extending towards the corresponding air gap (E₁, E₂).

5. Magnetic field generator according to claim 2, **characterized in that** a flat thermal insulation part (P_{I1}, P_{I2}) parallel to the central plane (P) is mounted on every magnetizing structure (S_{M11}, S_{M12}, S_{M21}, S_{M22}) and placed on the corresponding concentrator stages (E_{C1}, E_{C2}).

6. Magnetic field generator according to claim 1, **characterized in that** it comprises a third magnetizing structure (S_{M3}, S_{M31}, S_{M32}, S_{M33}, S_{M34}, S_{M35}) inserted in the central plane (P), between the first (S_{M12}, S_{M19}) and the second (S_{M22}, S_{M29}) magnetizing structures, said third magnetizing structure (S_{M3}, S_{M31}, S_{M32}, S_{M33}, S_{M34}, S_{M35}) comprising two magnetizing units (U₁, U₁₃₁, U₁₃₂, U₁₃₃, U₁₃₄, U₁₃₅, U₂, U₂₃₁, U₂₃₂, U₂₃₃, U₂₃₄, U₂₃₅) located respectively between the first (A_{M1}, A_{M19}) and the second (A_{M2}, A_{M29}) magnetizing assemblies of said first (S_{M12}, S_{M19}) and second (S_{M22}, S_{M29}) magnetizing structures, to delimit four air gaps (E₃, E₄, E₅, E_{6,} , E₇, E₈, E₉, E₁₀).

7. Magnetic field generator according to claim 6, **characterized in that** each magnetizing unit (U₁, U₁₃₁, U₁₃₂, U₁₃₃, U₁₃₄, U₁₃₅, U₂, U₂₃₁, U₂₃₂, U₂₃₃, U₂₃₄, U₂₃₅) comprises at least one permanent magnet (A_{PU1}, A_{PU2}) whose magnetic induction vector has the same orientation and the same direction as the magnetic induction vector of the magnetizing assemblies (A_{M1}, A_{M2}) between which said magnetizing unit (U₁, U₁₃₁, U₁₃₂, U₁₃₃, U₁₃₄, U₁₃₅, U₂, U₂₃₁, U₂₃₂, U₂₃₃, U₂₃₄, U₂₃₅) is positioned.

8. Magnetic field generator according to claim 6, **characterized in that** the magnetizing units (U₁, U₂) comprise permanent magnets (A_{PU1}, A_{PU2}) arranged on either side of a supporting element (M, M₃₁, M₃₂, M₃₃, M₃₄, M₃₅) made out of a ferromagnetic material.

9. Magnetic field generator according to claim 6, **characterized in that** the magnetizing units (U₁, U₂) comprise permanent magnets (A_{PU1}, A_{PU2}) arranged between two identical supporting elements (M, M₃₁, M₃₂, M₃₃, M₃₄, M₃₅) parallel with each other and made out of a ferromagnetic material.

10. Magnetocaloric thermal device (A_{T}) with a rotary structure, with at least one disk comprising magnetocaloric elements (E_{M}) and at least one magnetic field generator (G₁, G₂, G₃, G₄, G₅, G₆, G₇, G₈, G₉) according to any of the previous claims, said generator comprising a first (S_{M11}, S_{M12}, S_{M13}, S_{M14}, S_{M15}, SM₁₉) and a second (S_{M21}, S_{M22}, SM₂₉) identical magnetizing structures mounted head-to-tail, opposite to each other, parallel on either side of a central plane (P) and arranged to define at least two air gaps (E₁, E₂, E₃, E₄, E₅, E₆, E₇, E₈, E₉, E₁₀) located in a same plane and diametrically opposed, each magnetizing structure (S_{M11}, S_{M12}, S_{M13}, S_{M14}, S_{M15}, , SM₁₉, S_{M21}, S_{M22}, SM₂₉) comprising a first (A_{M1}, A_{M19}) and a second (A_{M2}, A_{M29}) structurally identical magnetizing assemblies, diametrically opposed, whose induction vectors are oriented in opposite directions, mounted on a support (S_{UP1}, S_{UP2}, S_{UP3}, S_{UP4}, S_{UP9}) made out of at least one ferromagnetic material and delimiting said air gaps between which the at least one disk carrying said magnetocaloric elements (E_{M}) is positioned, device **characterized in that** the first (A_{M1}, A_{M19}) and second (A_{M2}, A_{M29}) magnetizing assemblies of each magnetizing structure have each a structure with permanent magnets (A_{PI}, A_{PC}, A_{PU}) whose magnetic induction vectors are substantially perpendicular to the central plane (P) and comprise a passive side (F_{P1}, F_{P2}) and an active side (F_{A1}, F_{A2}), said active side delimiting said air gaps, and **in that** the induction vectors of the first (A_{M1}, A_{M19}) and second (A_{M2}, A_{M29}) magnetizing assemblies form inside of said generator one single circulation loop of a magnetic field through said supports (S_{UP1}, S_{UP2}, S_{UP3}, S_{UP4}, S_{UP9}) and said air gaps (E₁, E₂, E₃, E₄, E₅, E₆, E₇, E₈, E₉, E₁₀).

11. Magnetocaloric thermal device (A_{T}) according to claim 10, **characterized in that** said permanent magnet structure (A_{PI}, A_{PC}) is a stepped structure comprising at least two stages (E_{I1}, E_{I2}, E_{C1}, E_{C2}) of permanent magnets (A_{PI}, A_{PC}), **in that** said stages (E_{I1}, E_{I2}, E_{C1}, E_{C2}) are concentrically superposed and comprise a first stage of permanent magnets called magnetic flux initiator stage (E_{I1}, E_{I2}) forming said passive side (F_{P1}, F_{P2}) of the first (A_{M1}) and second (A_{M2}) magnetizing assemblies, and a second stage of permanent magnets called magnetic flux concentrator stage (E_{C1}, E_{C2}) forming said active side (F_{A1}, F_{A2}) of the first (A_{M1}) and second (A_{M2}) magnetizing assemblies delimiting said air gaps.

12. Magnetocaloric thermal device (A_{T}) according to claim 10 or claim 11, **characterized in that** said magnetic field generator (G₁, G₂, G₃, G₄, G₅, G₆, G₇, G₈, G₉) comprises a third magnetizing structure (S_{M3}, S_{M31}, S_{M32}, S_{M33}, S_{M34}, S_{M35}) inserted in the central plane (P), between the first (S_{M12}) and the second (S_{M22}) magnetizing structures, said third magnetizing structure (S_{M3}, S_{M31}, S_{M32}, S_{M33}, S_{M34}, S_{M35}) comprising two magnetizing units (U₁, U₁₃₁, U₁₃₂, U₁₃₃, U₁₃₄, U₁₃₅, U₂, U₂₃₁, U₂₃₂, U₂₃₃, U₂₃₄, U₂₃₅) located respectively between the first (A_{M1}) and the second (A_{M2}) magnetizing assemblies of said first (S_{M12}) and second (S_{M22}) magnetizing structures, to delimit four air gaps (E₃, E₄, E₅, E₆).
